# EUROPEAN PATENT APPLICATION

(11) **EP 4 792 973 A1**
(43) Date of publication of application: **19.08.2026**
(21) Application number: 24891398.0
(22) Date of filing: 12.11.2024
(51) Int. Cl.: B23K 35/30, B22F 1/00, C04B 37/02, C22C 9/00

(54) **BRAZING MATERIAL, JOINED BODY, METHOD FOR PRODUCING BRAZING MATERIAL, AND METHOD FOR PRODUCING JOINED BODY**

(30) Priority: 13.11.2023 JP 2023192859
(71) Applicant: Proterial, Ltd., Tokyo 135-0061 (JP)
(72) Inventor: NOGAWA Takashi, Koto-ku, Tokyo 1350061 (JP); TAKANO Shun, Koto-ku, Tokyo 1350061 (JP); OKAMOTO Atsushi, Koto-ku, Tokyo 1350061 (JP); OKISHIRO Kenji, Koto-ku, Tokyo 1350061 (JP)
(74) Representative: Diehl & Partner
(86) International application number: PCT/JP2024/040119
(87) International publication number: WO 2025/105362

(57) **Abstract**

There is provided a brazing material containing: Cu; Mg; at least one first element selected from the group consisting of Sn, Sb, and Bi; and at least one second element selected from the group consisting of Ti, Zr, Hf, V, Nb, Ta, Cr, Mo, W, Y, Ca, Ce, La, Sm, Yb, Nd, Gd, and Er.

## Description

### Technical Field

The present disclosure relates to a brazing material, a joined body, a brazing material manufacturing method, and a joined body manufacturing method.

### Background Art

A joined body formed by joining a metal member such as copper to a ceramic material may be used as a constituent material of a power control device mounted on an electric vehicle or a hybrid vehicle. A technique using an active metal brazing material containing silver (Ag) is known for joining the metal member and the ceramic material. In recent years, in order to solve problems such as Ag migration and high cost, a technique has been proposed in which joining is performed using a material containing an active metal that does not contain Ag as a main phase (see, for example, Patent Document 1).

### Citation List

### Patent Document

[Patent Document 1] JP 2018-140929 A

### Summary of the Invention

### Problem to be Solved by the Invention

An object of the present disclosure is to provide a technique for increasing a joining strength of a joined body using an active metal brazing material that does not contain Ag as a main phase.

### Means for Solving the Problem

According to one aspect of the present disclosure, there is provided a brazing material containing:
Cu;
Mg;
at least one first element selected from the group consisting of Sn, Sb, and Bi, and
at least one second element selected from the group consisting of Ti, Zr, Hf, V, Nb, Ta, Cr, Mo, W, Y, Ca, Ce, La, Sm, Yb, Nd, Gd, and Er.

According to another aspect of the present disclosure, there is provided a joined body including:
a first member composed of metal;
a second member joined to the first member and composed of the same or a different metal as the first member, or ceramics; and
a joining layer on joining surfaces of the first member and the second member,
wherein the joining layer contains:
   Cu;
   Mg;
   at least one first element selected from the group consisting of Sn, Sb, and Bi;
   and at least one second element selected from the group consisting of Ti, Zr, Hf, V, Nb, Ta, Cr, Mo, W, Y, Ca, Ce, La, Sm, Yb, Nd, Gd, and Er.

According to a further aspect of the present disclosure, there is provided a brazing material manufacturing method, which is a method for manufacturing a brazing material used to join a metal member and a ceramic member, the brazing material containing Cu, Mg, at least one first element selected from the group consisting of Sn, Sb, and Bi, and at least one second element selected from the group consisting of Ti, Zr, Hf, V, Nb, Ta, Cr, Mo, W, Y, Ca, Ce, La, Sm, Yb, Nd, Gd, and Er.

According to a further aspect of the present disclosure, there is provided a joined body manufacturing method including:
placing a first member and a second member so that a first member composed of metal and a second member composed of the same or a different metal as the first member or ceramics are stacked, interposing a brazing material therebetween; and
heating and holding a stacked body of the first member and the second member while applying pressure in a stacking direction,
wherein a material containing Cu, Mg, at least one first element selected from the group consisting of Sn, Sb, and Bi, and at least one second element selected from the group consisting of Ti, Zr, Hf, V, Nb, Ta, Cr, Mo, W, Y, Ca, Ce, La, Sm, Yb, Nd, Gd, and Er, is used as the brazing material.

### Advantageous Effects of the Invention

According to the present disclosure, a joining strength of a joined body can be increased.

### Brief Description of the Drawings

[Fig. 1] Fig. 1 is a partial cross-sectional view of a metal/ceramic joined body 100 according to one embodiment of the present disclosure.
[Fig. 2] Fig. 2 is a partially enlarged view of a dashed line area A in Fig. 1.
[Fig. 3] Fig. 3 (a) is a schematic view showing a shear stress applied to a joining layer 30, and Fig. 3 (b) is a schematic view showing a tensile stress applied to the joining layer 30.
[Fig. 4] Fig. 4 (a) shows a state in which a metal member 10 and a ceramic member 20 are placed with the brazing material 50 interposed therebetween, Fig. 4 (b) shows a state in which a stacked body of the metal member 10 and the ceramic member 20 is heated while being pressurized, and Fig. 4 (c) shows a manufactured metal/ceramic joined body 100, respectively.
[Fig. 5] Fig. 5 is a schematic view showing a state when a shear strength test is performed.
[Fig. 6] Fig. 6 is an enlarged image of a partial cross section of the joining layer of sample 1.
[Fig. 7] Fig. 7 is an enlarged image of a partial cross section of the joining layer of sample 8.
[Fig. 8] Fig. 8 is an enlarged image of a partial cross section of the joining layer of sample 15.

### Description of Embodiments

A brazing material is required not only to avoid significantly changing a microstructure of a material to be joined when heated, but also to be strong in the resulting joining layer. The present inventors have found that a Cu-Mg eutectic composition, which can significantly lower the melting point of Cu, is suitable as a composition for the active metal brazing material that satisfies the above requirements.

However, in a Cu-Mg binary eutectic composition, the vapor pressure of Mg is high, and it is known that evaporation proceeds rapidly at a temperature of 600°C or higher when Mg is added alone, and at a temperature of 780°C or higher when Mg is added as MgCu₂. A joining temperature at which the brazing material can be used is 720°C that is a Cu-Mg eutectic point at which a liquid phase begins to be formed. However, in consideration of wettability, etc., of the liquid phase, heating at a higher temperature is required, which tends to cause the Mg to evaporate more easily. Therefore, before a strong joining microstructure is formed, there is a possibility that voids are formed due to Mg evaporation, and the joining layer containing such voids tends to have low joining strength. Further, if Mg is excessively added, it is possible to join before evaporating the Mg, but large amounts of intermetallic compounds known to be brittle, such as MgCu₂ and CuMg₂, are formed, and it tends to be difficult to maintain a high joining strength. Thus, although it is possible to significantly lower a melting temperature in the Cu-Mg binary eutectic composition, there are also many factors that decrease the joining strength, making it difficult to achieve a high-strength joining.

The present inventors have investigated methods for inhibiting the evaporation of Mg from the Cu-Mg eutectic composition, and devised adding an element that combines with Mg to form a compound having a melting point higher than that of Mg, while also forming a eutectic with each of Cu and Mg, or forming a ternary eutectic with Cu and Mg. As elements that cause such a eutectic reaction, the present inventors have focused on, for example, silicon (Si), germanium (Ge), tin (Sn), phosphorus (P), arsenic (As), antimony (Sb), bismuth (Bi), and the like.

Therefore, the present inventors added the above elements to a Cu-Mg based active metal brazing material and investigated the resulting joining layer. As a result, the inventors found that, among the above elements, Sn, Sb and Bi increased the joining strength, whereas Si, Ge, P and As did not sufficiently increase the joining strength. Further investigation into this point revealed that Si, and the like tend to be more reactive with active metal elements described below than with Mg, and therefore the intended effect of reacting with Mg and inhibiting its evaporation cannot be achieved.

From these findings, the present inventors have found that, in order to suppress the decrease in joining strength due to evaporation of Mg in Cu-Mg based active metal brazing material, it is effective to add Sn, Sb and Bi as Mg evaporation inhibiting elements, which react with Mg to form compounds having melting points higher than that of Mg.

The present invention was made based on the above findings.

### <One embodiment of the present disclosure>

One embodiment of the present disclosure will be described with reference to the above-described drawings. The drawings used in the following description are all schematic. The dimensions and proportions of the elements shown in the drawings do not necessarily correspond to those of reality. Further, the dimensions and proportions of elements do not necessarily match between drawings. In addition, in this specification, a numerical range expressed using "to" means a range that includes the numerical values before and after "to" as lower and upper limits.

### (1) Brazing material

The brazing material of this embodiment is a Cu-Mg based active metal brazing material containing Cu as a main component (mainly Cu with Mg as an essential component) (for example, 50 at.% or higher Cu). Specifically, the brazing material contains Cu, Mg, at least one first element selected from the group consisting of Sn, Sb, and Bi (hereinafter also referred to as "Mg evaporation inhibiting elements"), and at least one second element selected from the group consisting of Ti, Zr, Hf, V, Nb, Ta, Cr, Mo, W, Y, Ca, Ce, La, Sm, Yb, Nd, Gd, and Er (hereinafter also referred to as "active metal elements"). The brazing material preferably contains Mg, an Mg evaporation inhibiting element, an active metal element, and inevitable impurities, with the remainder being Cu. In addition, by not containing Ag, the brazing material can further improve migration resistance. The brazing material can be used to join a metal member to a ceramic member, or to join two metal members together. The inevitable impurities are elements other than those intentionally added when preparing the brazing material, such as elements derived from raw materials.

Cu is an element that forms a solid solution that mainly constitutes the joining layer when the brazing material is heated to perform joining, and Cu also contributes to the ductility and malleability of the joining layer.

Mg acts to lower the melting point of Cu, thereby lowering the joining temperature of the brazing material, and also acts to increase the wettability of the brazing material with metal members and ceramic members.

The Mg evaporation inhibiting element is an element that easily reacts with Mg when the brazing material is heated, and acts to form a compound with Mg by reacting with Mg. This compound has a melting point higher than that of Mg and melts at the joining temperature, and it is formed in a eutectic manner that suppresses the evaporation of molten components such as Mg. Therefore, the Mg evaporation inhibiting element reacts with Mg during joining and can inhibit the evaporation of Mg. Further, the Mg evaporation inhibiting element forms a ternary intermetallic compound with Cu and Mg when the brazing material is heated, and acts to improve the strength of the intermetallic compound. As the Mg evaporation inhibiting element, at least one selected from the group consisting of Sn, Sb and Bi can be used. More preferably, at least one of Sn and Sb is always included as the Mg evaporation inhibiting element (excluding the case of Bi alone), and even more preferably, the first element is composed of at least one of Sn and Sb (not including Bi).

When the brazing material is heated, the active metal element reacts with the ceramic member to form a compound, and acts to increase the joining strength between the ceramic member and the joining layer. As the active metal element, for example, at least one selected from the group consisting of titanium (Ti), zirconium (Zr), hafnium (Hf), vanadium (V), niobium (Nb), tantalum (Ta), chromium (Cr), molybdenum (Mo), tungsten (W), yttrium (Y), calcium (Ca), cerium (Ce), lanthanum (La), samarium (Sm), ytterbium (Yb), neodymium (Nd), gadolinium (Gd), and erbium (Er) can be used. When the ceramic member is Si₃N₄ or AlN, it is preferable to use at least one selected from the group consisting of Ti, V, Nb, Cr, Mo, and Ca as the active metal element, and Ti is particularly preferable.

The content of each element is not particularly limited. For example, Cu content is preferably 50 at.% or more and 95 at.% or less, and more preferably 55 at.% or more and 80 at.% or less. Mg content is preferably 1 at.% or more and 15 at.% or less, and more preferably 3 at.% or more and 12 at.% or less. The content of the Mg evaporation inhibiting element is preferably 1 at.% or more and 20 at.% or less, and more preferably 3 at.% or more and 15 at.% or less. The content of the active metal element is preferably 0.1 at.% or more and 10 at.% or less, and more preferably 1 at.% or more and 10 at.% or less. A portion of Cu may be replaced by another element within a range of 1 at.% or less. Further, when the content of Mg is X at.% and the content of the Mg evaporation inhibiting element is Y at.%, it is preferable that X - 6 ≤ Y ≤ X + 6 is satisfied, and it is more preferable that X - 5 ≤ Y ≤ X + 5 is satisfied. By containing each element within such content ranges, a desired joining strength in the joining layer can be obtained while lowering the joining temperature of the brazing material, and therefore these content ranges are preferable.

The form of the brazing material is not particularly limited, and may be, for example, a paste form, a foil form, or a wire form. Among these, the paste form is preferable from the viewpoint of obtaining a uniform phase structure in the joining layer, which will be described later. The brazing material in the paste form contains a powder containing the above-described elements. In the case of the foil form, either roll quenching or rolling can be selected as a manufacturing method. In the case of the wire form, a general wire drawing method can be used as a manufacturing method.

In the brazing material in the paste form, the manner in which each element is added is not particularly limited. Each element may be contained as an elemental powder or as a compound powder containing the corresponding element. The manner in which each element is added will be described below.

Mg may be added in the form of a powder containing at least one of the following: elemental Mg, an Mg solid solution containing other elements, a compound with Cu (MgCu₂), a compound with an active metal element, and a compound with a Mg evaporation inhibiting element. Among these, it is preferable that at least a portion of Mg be added in the form of a powder containing an intermetallic compound with the Mg evaporation inhibiting element. For example, an addition form of Mg may be as follows: an alloy powder composed of Mg and an intermetallic compound containing Mg and Mg evaporation inhibiting element, or an alloy powder composed of the Mg evaporation inhibiting element and an intermetallic compound containing Mg and Mg evaporation inhibiting element. Alternatively, the above-described alloy powder may be mixed with at least one of Mg powder and Mg-Cu intermetallic compound powder, etc., and the resulting mixture may be added. By previously converting at least a portion of the Mg into an intermetallic compound with the Mg evaporation inhibiting element, evaporation of Mg during melting of the brazing material can be more reliably inhibited. The alloy powder does not refer to a mixture of a powder containing one element and a powder containing another element, but instead refers to a powder in which respective elements are contained in the form of an alloy within a single particle. In addition, a solid solution containing another element refers to a solid solution in which a portion of the constituent elements in the crystal lattice is replaced by another element, or a solid solution in which another element has penetrated into the gaps in a crystal lattice.

The alloy powder may contain at least Mg and Mg evaporation inhibiting element, and may further contain Cu. When the Mg evaporation inhibiting element is Sn, for example, Mg₂Sn or Cu₄MgSn, and the like may be used as the alloy powder. When the Mg evaporation inhibiting element is Sb, Mg₃Sb₂, CuMgSb, and the like may be used. When the Mg evaporation inhibiting element is Bi, Mg₃Bi₂, CuMgBi, and the like may be used.

The alloy powder may be prepared by mixing and melting Mg, a Mg evaporation inhibiting element, and Cu as necessary, and then atomizing the molten mixture to form a spherical powder containing the respective elements. The atomization method may be selected from gas atomization, disk atomization, water atomization, and plasma atomization.

An addition amount of the alloy powder containing Mg and the Mg evaporation inhibiting element is not particularly limited. However, it is preferable to add the alloy powder in an amount such that the Mg content derived from the alloy powder is 40% or more of a total content of Mg content contained in the brazing material. For example, when the alloy powder containing Mg and an Mg evaporation inhibiting element is used in combination with at least one of Mg metal powder, Mg-active metal alloy powder, Mg-Cu intermetallic compound powder, and the like, the addition amount of Mg and the alloy powder containing the Mg evaporation inhibiting element may be adjusted so that the Mg content derived from the alloy powder containing Mg and the Mg evaporation inhibiting element accounts for 40% or more of the total Mg content in the brazing material. The addition amount of the alloy powder may be 100% of the total Mg content in the brazing material, that is, it is acceptable to add only alloy powder. With this addition amount, evaporation of Mg can be more reliably inhibited.

Cu may be added in the form of a powder containing at least one of the following: elemental Cu, a Cu solid solution containing other elements, an intermetallic compound with Mg (e.g., MgCu₂, and the like), an intermetallic compound with an Mg evaporation inhibiting element (e.g., Cu₃Sn, Cu₃Sb, and the like), an intermetallic compound with an active metal element (e.g., Cu-Ti compound such as Cu₄Ti, Cu₃Ti₂, and the like), or an alloy containing elemental Cu, a solid solution and an intermetallic compound with Cu.

The Mg evaporation inhibiting element may be added in the form of a powder including at least one of the following: the elemental form of the Mg evaporation inhibiting element, a solid solution containing other elements, a compound with at least one of Mg, Cu and an active metal element, or an alloy containing an Mg evaporation inhibiting element, a solid solution and intermetallic compound with Cu.

The active metal element may be added in the form of a powder containing at least one of the following: the elemental form of the active metal element, a solid solution containing other elements, a hydride, or an intermetallic compound formed with at least one of Mg, Cu, and an Mg evaporation inhibiting element.

An addition amount of the powder containing each element is not particularly limited. However, it is preferable that each powder is contained in the brazing material so that, for example, Cu content is 50 at.% or more and 80 at.% or less, the Mg content is 1 at.% or more and 15 at.% or less, the content of the Mg evaporation inhibiting element is 1 at.% or more and 20 at.% or less, and the content of the active metal element is 0.1 at.% or more and 10 at.% or less. By setting the content of each element within the above ranges, it is possible to more reliably achieve the effects of lowering the joining temperature due to Mg and inhibiting the evaporation of Mg using an Mg evaporation inhibiting element.

In the brazing material, the particle size of each powder containing Cu, Mg, the Mg evaporation inhibiting element, and the active metal element may be appropriately selected depending on the size of the material to be joined and the thickness of the joining layer. For example, in the case of macrostructures such as heat exchangers and hermetically sealed bodies, a relatively large particle size may be used, and it is preferable that an average particle size D50 is 45 µm or more and 150 µm or less. Further, for example, when the purpose is to reduce the thermal resistance of a joined body such as a circuit board, it is desirable to form a thin joining layer having lower thermal conductivity compared to pure metal. In such a case, it is preferable that the average particle size D50 be 45 µm or less. On the other hand, although there is no particular lower limit in the average particle size, it is preferable that the average particle size D50 be 5 µm or more in order to suppress the influence of a surface oxidation of the powder. The average particle size D50 can be determined using, for example, a laser diffraction particle size distribution measuring device.

For the brazing material, metal powder may be used in the paste form as necessary, and binders, solvents, surfactants, plasticizers, dispersants, and the like may be included in addition to the metal powder. As a binder, for example, polyvinyl alcohol, ethyl cellulose, polymethacrylic acid, polyacrylic, and the like, can be used. As a solvent, for example, alcohols such as terpineol and butanediol, and toluene can be used. As a surfactant, for example, cationic surfactants, anionic surfactants, and nonionic surfactants can be used.

The method for preparing the brazing material is not particularly limited, and any conventionally known method may be used.

### (2) Joined body

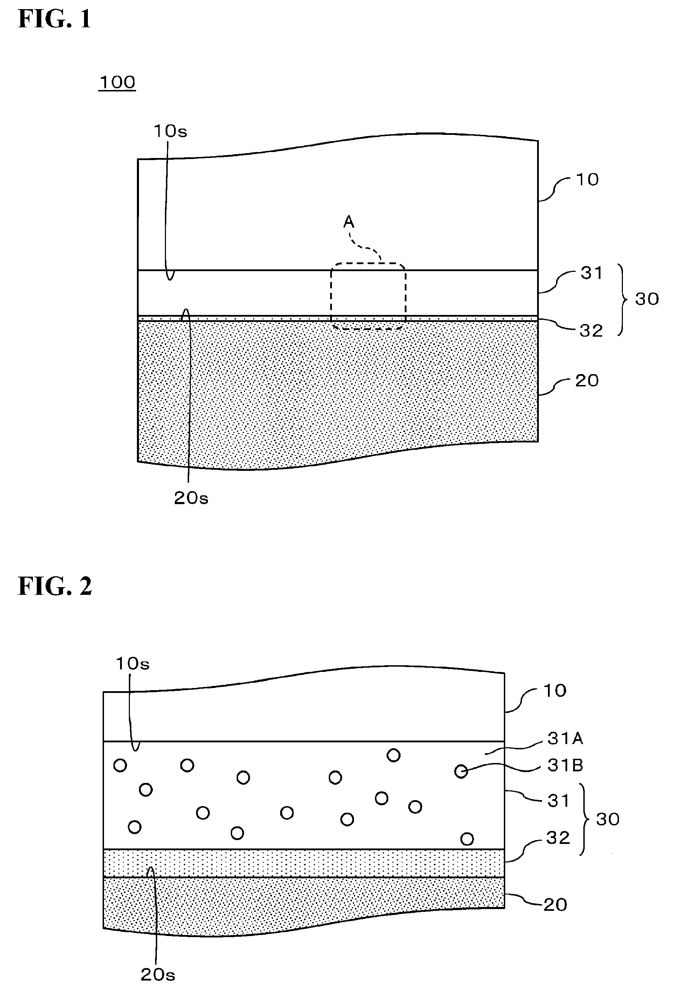

Next, the joined body will be described with reference to Fig. 1. This embodiment shows an example of a joined body (hereinafter also referred to as a metal/ceramic joined body) in which a metal member (first member) and a ceramic member (second member) are joined together. Fig. 1 is a partial cross-sectional view of a metal/ceramic joined body according to one embodiment of the present disclosure.

As shown in Fig. 1, a metal/ceramic joined body 100 includes a metal member 10, a ceramic member 20 joined to the metal member 10, and a joining layer 30 formed on joining surfaces of the metal member 10 and the ceramic member 20.

### (Metal member)

The metal member 10 is composed of pure copper, copper alloy, pure nickel, nickel alloy, titanium alloy, stainless steel (SUS), chromium-based alloy, iron-based alloy, cobalt-based alloy, molybdenum-based alloy, and the like. As the pure copper, for example, oxygen-free copper, tough-pitch copper, and phosphorus-deoxidized copper can be used. As the copper alloy, alloys containing copper (Cu) as a main element and containing at least one element selected from the group consisting of zinc (Zn), tin (Sn), phosphorus (P), aluminum (Al), beryllium (Be), cobalt (Co), nickel (Ni), iron (Fe), and manganese (Mn) can be used. As the iron-based alloy, Invar (registered trademark), Kovar (registered trademark), high-speed steel, and die steel can be used.

The shape or dimension of the metal member 10 is not particularly limited, but when the metal/ceramic joined body 100 is used as a constituent material of an insulating circuit board, it can be, for example, a flat plate having a thickness in a range of 0.1 mm or more and 6.0 mm or less.

### (Ceramic member)

The ceramic member 20 may contain at least one of, for example, a nitride, a carbide, and an oxide. Examples of nitrides include silicon nitride (Si₃N₄) and aluminum nitride (AlN). Examples of carbides include silicon carbide (SiC) and diamond. Examples of oxides include aluminum oxide (Al₂O₃).

The shape or dimensions of the ceramic member 20 is not particularly limited either. However, when the metal/ceramic joined body 100 is used as a constituent material of an insulating circuit board, the ceramic member 20 may be, for example, a flat plate having a thickness in a range of 0.2 mm or more and 4.0 mm or less.

### (Joining layer)

A joining layer 30 is formed between the metal member 10 and the ceramic member 20, along joining surfaces 10s and 20s. The joining layer 30 is formed from the brazing material described above, and contains Cu, Mg, an Mg evaporation inhibiting element, and an active metal element.

As shown in Fig. 1, the joining layer 30 has a stacked structure of a first layer 31 that forms an interface with the metal member 10 and a second layer 32 that forms an interface with the ceramic member 20 and is in contact with the first layer 31. The thickness of the first layer 31 is, for example, 1 µm or more and 2000 µm or less, and the thickness of the second layer 32 is, for example, 2 nm or more and 5000 nm or less.

The first layer 31 has a solid solution phase in which at least one of Mg and an Mg evaporation inhibiting element is dissolved in Cu, and compound phases containing an intermetallic compound containing Cu, Mg, and an Mg evaporation inhibiting element. The composition of the solid solution of Mg and the Mg evaporation inhibiting element may vary depending on the type of the Mg evaporation inhibiting element. The compound phases include a ternary intermetallic compound composed of Cu, Mg, and the Mg evaporation inhibiting element.

### (First layer)

Here, the first layer 31 will be described in detail with reference to Fig. 2. Fig. 2 is a partially enlarged view of a dashed-line area A in Fig. 1.

As shown in Fig. 2, the first layer 31 is composed of a solid solution phase 31A and compound phases 31B dispersed therein.

The solid solution phase 31A is mainly composed of a solid solution of Cu, at least one of the Mg and the Mg evaporation inhibiting elements. When the Mg evaporation inhibiting element is Sn, both Mg and Sn may be dissolved in the solid solution phase 31A. When the Mg evaporation inhibiting element is Sb, at least Sb may be dissolved in the solid solution phase 31A, whereas Mg may not be dissolved in some cases. When the Mg evaporation inhibiting element is Bi, at least Mg may be dissolved in the solid solution phase 31A, whereas Bi may not be dissolved in some cases. Further, the solid solution phase 31A may contain, as solid solutions, the active metal element contained in the brazing material, as well as Si, Al, and the like contained in the ceramic member 20. In the solid solution phase 31A, each element is dissolved as a solid solution, and thus the strength of the solid solution phase 31A can be increased due to solid solution strengthening.

The compound phases 31B contain a ternary intermetallic compound containing Cu, Mg, and an Mg evaporation inhibiting element. The compound phases 31B are formed, for example, by precipitation of the intermetallic compound, and the intermetallic compound contained therein depends on the type of the Mg evaporation inhibiting element. Specifically, when the Mg evaporation inhibiting element is Sn, the ternary intermetallic compound is Cu₄MgSn. When the Mg evaporation inhibiting element is Sb, the ternary intermetallic compound is CuMgSb, and when the Mg evaporation inhibiting element is Bi, the ternary intermetallic compound is CuMgBi. When the Mg evaporation inhibiting elements are two or more types, the ternary intermetallic compound is CuMg (Sn, Sb, Bi) in which Sn, Sb, and Bi are partially substituted for one another. Although the compound phases 31B contain at least a ternary intermetallic compound, they may also contain Cu, Mg and an Mg evaporation inhibiting element as intermetallic compounds in other forms. Examples are as follows: binary intermetallic compounds composed of two types of Cu, Mg and Mg evaporation inhibiting elements, simple metals of each element, or intermetallic compounds further containing active metal elements.

In the first layer 31, it is preferable that the solid solution phase 31A, which has excellent malleability and ductility, be configured as a continuous phase. It is more preferable that the first layer 31 has a structure in which the compound phases 31B are phase-separated in a sea-island pattern within the solid solution phase 31A, as shown in Fig. 2. The compound phases 31B containing intermetallic compounds are more brittle than the solid solution phase 31A containing a solid solution, and therefore may serve as factors that decreases the joining strength of the joining layer 30. When these compound phases 31B are continuous in a layered structure throughout the entire joining layer 30 and are formed at locations corresponding to stress concentration points, crack propagation cannot be arrested when stress is applied to the compound phases 31B, which may result in a significant decrease in the joining strength. In this regard, when the joining layer 30 has a sea-island structure as shown in Fig. 2, the joining strength can be maintained at a higher level.

In the first layer 31, it is preferable that the compound phases 31B be uniformly dispersed over substantially the entire thickness and width of the first layer 31, without being present as layered continuous phases at stress concentration points. Specifically, when an arbitrary region in the first layer 31 is extracted in units of 10 µm in thickness to measure the area ratio of the compound phases 31B in the arbitrary region, it is preferable that all area ratios be 40% or less. Due to the presence of the compound phases 31B at such a predetermined area ratio within the arbitrary region, the compound phases 31B can be dispersed in the solid solution phase 31A, thereby suppressing localized appearance of the compound phases 31B and the resulting decrease in the joining strength. The area ratio of the compound phases 31B is calculated by dividing the total area of the compound phases 31B dispersed within the extracted region by the area of the extracted region.

Further, in the first layer 31, the solid solution phase 31A is preferably configured as a continuous phase that connects the second layer 32 and the metal member 10. That is, the first layer 31 preferably has a path composed of the solid solution phase 31A that connects the second layer 32 and the metal member 10. The solid solution phase 31A is mainly formed of a solid solution containing Cu, having excellent malleability and ductility. Since the solid solution phase 31A is not interrupted by the compound phases 31B and is configured to continuously connect the second layer 32 and the metal member 10, it is possible to firmly join the metal member 10 and the ceramic member 20 together, thereby improving the joining strength. The continuous phase is preferably formed so that the compound phases 31B are finely dispersed.

Further, due to forming the joining layer 30 using the brazing material described above, the occurrence of voids can be suppressed. When the metal member 10 and the ceramic member 20 are joined using the brazing material containing Mg, there is a concern that the evaporation of the Mg contained in the brazing material may cause voids or pinholes (hereinafter collectively referred to as voids) to be generated in the first layer 31. The presence of such voids is a factor that decreases the joining strength between the metal member 10 and the ceramic member 20. In this regard, according to this embodiment, by containing the Mg evaporation inhibiting element in the brazing material, evaporation of Mg can be inhibited, and the occurrence of voids in the joining layer 30 can be reduced.

Specifically, in the joining layer 30, when the first layer 31 is observed in a cross section perpendicular to the joining surfaces 10s and 20s, preferably, not a single void with a circular equivalent diameter of 8 µm or more is observed within any field of view of approximately 10,000 µm². More preferably, not a single void having a circular equivalent diameter of 4 µm or more is observed, and even more preferably, not a single void having a circular equivalent diameter of 1 µm or more is observed. In other words, the number of voids having a circular equivalent diameter of 8 µm or more is preferably less than one per 10,000 µm². More preferably, the number of voids of 4 µm or more is less than one, and even more preferably, the number of voids of 1 µm or more is less than one.

In the solid solution phase 31A, at least one of Mg and an Mg evaporation inhibiting element is dissolved in the Cu crystal, and the amount of each element dissolved in the solid solution is not particularly limited. For example, among the Mg evaporation inhibiting elements, the amount of Mg dissolved in the solid solution is preferably 5 at.% or less, and the amount of Sn dissolved in the solid solution is preferably 5 at.% or less. Also, for example, the amount of Sb dissolved in the solid solution is preferably 4 at.% or less, and the amount of Bi dissolved in the solid solution is preferably 1 at.% or less. The amount of the solid solution can be measured by, for example, subjecting the solid solution phase 31A to energy dispersive X-ray analysis using the energy dispersive X-ray spectroscopy (EDX).

When the Mg evaporation inhibiting element in the solid solution phase 31A is Sn, it is more preferable that the ratio A/B be 0.5 or more and 2.0 or less, where A is the amount of dissolved Mg and B is the amount of dissolved Mg evaporation inhibiting element in the solid solution phase 31A. By forming the solid solution of Mg and Sn in such a ratio, the joining strength of the joining layer 30 can be further increased.

At the interface of the first layer 31 on the metal member 10 side, metal may diffuse from the metal member 10 to the first layer 31, forming an interfacial reaction layer containing elements derived from the metal member 10 and elements derived from the joining layer 30 in some cases.

### (Second layer)

In the joining layer 30, a second layer 32 that forms the interface with the ceramic member 20 contains a compound of an active metal element. The compound of the active metal element may also contain an element derived from the ceramic member 20. For example, when the active metal element is Ti and the ceramic member 20 contains a nitride such as silicon nitride, the second layer 32 is mainly composed of titanium nitride (TiN) as a compound containing the active metal element. Further, for example, when the active metal element is Ti and the ceramic member 20 contains a carbide such as silicon carbide, the second layer 32 is mainly composed of titanium carbide (TiC) as a compound containing the active metal element. The compound of the active metal element that constitutes the second layer 32 may sometimes also contain an element that inhibits evaporation of Mg.

In this embodiment, the second layer 32 may further contain a silicide or an aluminide of the active metal element. When the ceramic member 20 is composed of Si₃N₄, the second layer 32 may possibly contain a silicide of the active metal element, such as Ti₅Si₃, and when the ceramic member 20 is composed of AlN, the second layer 32 may possibly contain an aluminide of the active metal element, such as TiAl.

### (Joining strength)

In this embodiment, by forming the joining layer 30 from the brazing material described above, a high joining strength between the metal member 10 and the ceramic member 20 can be achieved. Specifically, the shear strength of the joining layer 30 in this embodiment is 20 MPa or more. Further, the shear strength of 50 MPa or more can be obtained, and further, the shear strength of 80 MPa or more can be obtained.

Tensile strength of the joining layer 30 in this embodiment is 40 MPa or more. Further, the tensile strength of 90 MPa or more can be obtained, and further the tensile strength of 140 MPa or more can be obtained.

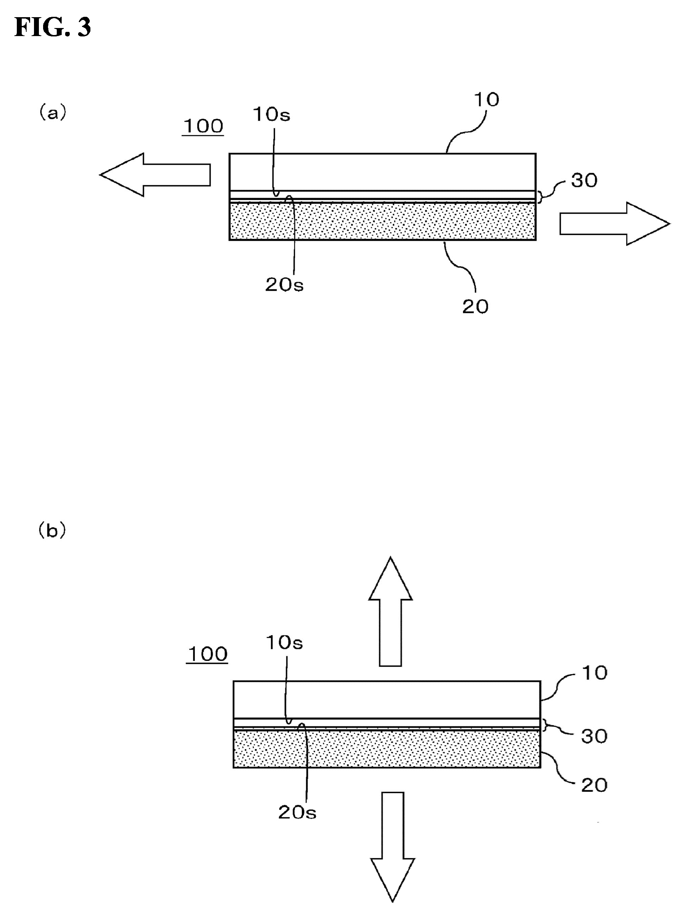

The shear strength of the joining layer 30 here refers to the magnitude of a shear load per unit area required to fracture (shear fracture) the joining layer 30 when stress (shear stress) is applied to the joining layer 30 so as to displace the metal member 10 and the ceramic member 20 in opposite directions along a direction parallel to the joining surfaces 10s and 20s, as shown in Fig. 3(a). Also, the tensile strength of the joining layer 30 refers to the magnitude of a tensile load per unit area required to fracture the joining layer 30 when stress (tensile stress) is applied to the joining layer 30 so as to pull the metal member 10 and the ceramic member 20 apart from each other in a direction perpendicular to the joining surfaces 10s and 20s, as shown in Fig. 3(b).

### (3) Method for manufacturing a metal/ceramic joined body

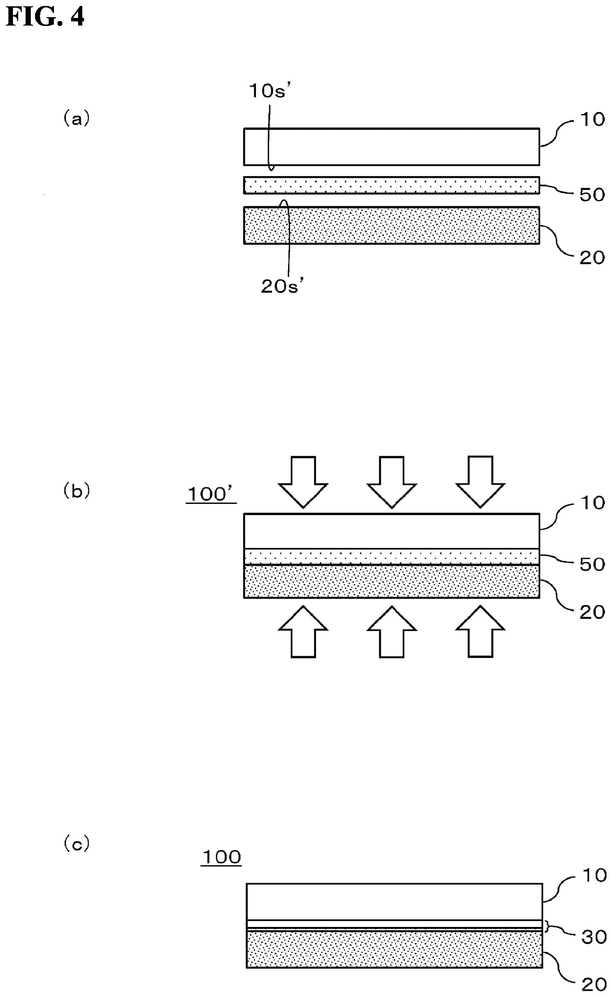

Next, a method for manufacturing the above-described metal/ceramic joined body 100 will be described with reference to Figs. 4 (a) to 4 (c).

First, as shown in Fig. 4 (a), the metal member 10 and the ceramic member 20 are placed so as to be stacked, with the brazing material 50 interposed therebetween.

The brazing material 50 may be any of the brazing materials described above. For example, a brazing material containing 50 at.% or more and 80 at.% or less Cu, 1 at.% or more and 15 at.% or less Mg, 1 at.% or more and 20 at.% or less of the Mg evaporation inhibiting elements, and 0.1 at.% or more and 10 at.% or less of the active metal elements, may be used. In the brazing material 50, Cu, Mg, the Mg evaporation inhibiting element, the active metal element, and the like may be contained as powders in the form of the compounds described above. In this case, it is preferable that at least a portion of the Mg be added in the form of an alloy powder formed from an intermetallic compound containing at least Mg and the Mg evaporation inhibiting element. For example, a powder containing Cu, an alloy powder formed from an intermetallic compound containing at least Mg and the Mg evaporation inhibiting element, and a powder containing the active metal element may be appropriately mixed so that each element has a predetermined content.

As a method for placing the brazing material 50 on the intended joining surfaces 10s', 20s' of the metal member 10 and the ceramic member 20, known methods such as screen printing, transfer, dispensing, inkjet, spray coating, sputtering, vapor deposition, and the like may be used, and more preferably, screen printing may be employed. In the case of a placement method using powder, such as screen printing or dispensing, it is preferable to use the powder in the paste form described above. The brazing material 50 may be formed by molding a powder brazing material into a preform shape. Furthermore, the brazing material 50 may be integrated with and joined to the metal member 10 or the ceramic member 20 prior to stacking, and methods such as cladding by rolling or metallization by heat treatment may be used as the integration method.

Next, as shown in Fig. 4 (b), the stacked body 100' of the metal member 10 and the ceramic member 20 with the brazing material 50 interposed therebetween is heated and held in a predetermined atmosphere while being pressed in a stacking direction. The predetermined atmosphere may be any one of a vacuum atmosphere (reduced-pressure atmosphere), an inert gas atmosphere, and a reducing atmosphere.

The heating temperature during joining may be, for example, equal to or higher than the melting point of the brazing material 50 and equal to or lower than the melting point of the metal member 10. Further, it is preferable that the heating temperature be 115% or less, and more preferably be 101% or more and 110% or less of the melting point (°C) of the brazing material 50. This improves the diffusibility of the active metal element, making it easier to form the second layer 32. When the brazing material 50 of this embodiment is used, the heating temperature is preferably 720°C or higher and 1000°C or lower, and more preferably 850°C or lower, for example. As a heat treatment furnace used for joining, a known furnace such as a stationary batch furnace, a multi-chamber furnace, a belt conveyor furnace, or a roller hearth kiln can be used.

Other conditions for joining include the following:
Oxygen concentration: 0.01 vol.ppm or more and 1000 vol.ppm or less, or more preferably 0.1 vol.ppm or more and 100 vol.ppm or less.
Pressure: 0.5 kPa or higher.
Holding time: No particular limitation, but for example, 3 minutes or more and 120 minutes or less.

During heating, a liquid phase needs to be formed in a part of the brazing material 50, and in addition, the active metal element needs to be melted in the liquid phase. This state can be achieved, for example, when the heating temperature is set to 720°C or higher in the case of a Cu-Mg-Sb alloy in which the active metal is Ti and the Mg evaporation inhibiting element is Sb. However, an excessively high heating temperature may cause the evaporation of Mg to exceed the effect of the Mg evaporation inhibiting element in some cases, and in such a case it may become difficult to form a liquid phase or voids may occur in the resulting joining layer 30 in some cases. By setting the heating temperature to 1000°C or lower, it is possible to avoid the above problems. By applying a pressure of 0.5 kPa or more, it is possible to maintain a tight contact state between the metal member 10 and the ceramic member 20, with the brazing material 50 interposed therebetween, thereby increasing the joining strength between the metal member 10 and the ceramic member 20. The upper limit of the pressure is not particularly limited, but it may be, for example, about 20 kPa.

Thereafter, the heated stack 100' is cooled. As a result, the metal/ceramic joined body 100 shown in Fig. 4(c) is manufactured.

### (4) Effects

According to the embodiment, one or more of the following effects can be obtained.
(a) According to the brazing material of this embodiment, since the brazing material contains Cu, Mg, at least one Mg evaporation inhibiting element selected from Sn, Sb, and Bi, and an active metal element, so, during heating the brazing material and joining, at least Cu, Mg, and the Mg evaporation inhibiting element can be bonded to form an intermetallic compound. This intermetallic compound is characterized in that it melts easily at the joining temperature due to its eutectic reaction with Cu, and in that it is bonded with an Mg evaporation inhibiting element, making it difficult to cause evaporation of Mg from the eutectic melt when melted. That is, evaporation of Mg can be inhibited because Mg is bonded with the Mg evaporation inhibiting element, etc., during the time period from when the components contained in the brazing material melt to when it solidifies. As a result, in the joining layer 30 obtained by heating the brazing material, the formation of voids caused by evaporation of Mg can be reduced, a dense phase structure can be obtained, and high joining strength can be achieved.
(b) Further, since the brazing material contains Mg, the melting point of Cu can be lowered, and therefore high joining strength can be achieved at a low heating temperature, for example, in a range of 720°C or higher and 1000°C or lower. Further, since Mg is contained, the wettability to the metal member 10 and the ceramic member 20 can be increased.
(c) The brazing material contains 1 at.% or more and 15 at.% or less of Mg, 1 at.% or more and 20 at.% or less of Mg evaporation inhibiting elements, and 0.1 at.% or more and 10 at.% or less of active metal elements, and satisfies X - 6 ≤ Y ≤ X + 6, where X (ar.%) is the Mg content and Y (at.%) is the Mg evaporation inhibiting content. By containing each element within such content ranges, the effect described in (a) can be obtained more stably.
(d) It is preferable that the brazing material be formed in a paste and contain Cu powder containing Cu and an alloy powder formed from an intermetallic compound containing at least Mg and a Mg evaporation inhibiting element. Since Mg is formed into the intermetallic compound with an element that inhibits the evaporation of Mg in advance, the evaporation of Mg can be more reliably inhibited when the brazing material is heated, and as a result, the joining strength can be more reliably increased.
(e) The brazing material preferably contains an alloy powder so that the Mg content derived from the alloy powder accounts for 40% or more of a total Mg content contained in the brazing material. This makes it possible to more reliably obtain the above effect (d).
(f) When the metal member 10 and the ceramic member 20 are joined using the brazing material of this embodiment, the joining layer 30 is formed as a stacked structure including a first layer 31 that forms the interface with the metal member 10 and a second layer 32 that forms the interface with the ceramic member 20. Since the first layer 31 has a solid solution phase in which Mg and at least one of the Mg evaporation inhibiting elements are dissolved in Cu, and compound phases containing Cu, Mg, and an intermetallic compound containing the Mg evaporation inhibiting element, the occurrence of voids in the first layer 31 can be inhibited. In addition, since the compound phases 31B further contain the Mg evaporation inhibiting element, higher strength can be achieved compared with a case where the Mg evaporation inhibiting element is not contained. Since the second layer 32 contains a compound of an active metal element, it contributes to improving the joining between the metal member 10 and the joining layer 30. The joining layer 30 having such a phase structure can firmly join the metal member 10 and the ceramic member 20 together, thereby achieving high joining strength.
(g) By suppressing the occurrence of voids in the first layer 31 of the joining layer 30, it is preferable that when the first layer 31 is observed in a cross section perpendicular to the joining surface, not a single void with a circular equivalent diameter of 8 µm or more is observed within any field of view of 10,000 µm².
(h) It is preferable that the first layer 31 of the joining layer 30 has a phase structure in which the solid solution phase 31A constitutes a continuous phase as a sea phase, which is a parent phase, and the compound phases 31B are dispersed as island phases. When the compound phases 31B are locally concentrated, the corresponding region becomes prone to fracture when stress is applied. However, by dispersing the compound phases 31B, fracture due to applied load can be suppressed, and the joining strength can be more reliably increased.
(i) In the first layer 31 of the joining layer 30, when an arbitrary region having a thickness of 10 µm is extracted and the area ratio of the compound phases 31B in the arbitrary region is measured, it is preferable that all area ratios are 20% or more and 40% or less. When the area ratio of the compound phases 31B falls within a predetermined range, the compound phases 31B are finely dispersed in the solid solution phase 31A, and the effect described in (h) can be obtained more reliably.
(j) In the first layer 31 of the joining layer 30, the solid solution phase 31A is preferably configured as a continuous phase that connects the second layer 32 and the metal member 10. This allows the first layer 31 to have a path composed of the solid solution phase 31A, thereby more reliably increasing the joining strength.
(k) Since the joining layer 30 has any one of the above phase structures described in (f) to (j), the shear strength of the joining layer 30 can be increased to 20 MPa or more. Further, the tensile strength of the joining layer 30 can be increased to 40 MPa or more.
(l) Since the joining layer 30 is formed using the brazing material whose main phase is Cu, migration due to Ag as a main phase can be suppressed. That is, high migration resistance can be achieved in the joining layer 30.

### <Other embodiments of the present disclosure>

Although the embodiments of the present disclosure have been specifically described above, the present disclosure is not limited to the above embodiments and can be modified in various ways without departing from the spirit and scope of the present disclosure.

The above embodiments show a case where the metal member 10 and the ceramic member 20 are joined together, but the present disclosure is not limited thereto, and two metal members 10 may also be joined together. In this case, the two metal members 10 may be composed of the same type of metal or of different types of metal.

The metal/ceramic joined body 100 of this embodiment can be used, for example, as an insulating circuit board. In this case, for example, in order to form a circuit pattern in the metal member 10, etching may be performed after an etching resist is placed on the metal member 10. The type of the etching resist is not particularly limited, and for example, known resists such as heat-curable and ultraviolet-curable resists can be used. The method for placing the etching resist is not particularly limited, and methods such as placing a film-like resist film, screen printing, and inkjet coating can be used. Further, after unnecessary portions of the metal member 10 have been removed by etching from the metal/ceramic joined body 100 , unnecessary portions of the joining layer 30 may be further removed as needed. In addition, the metal/ceramic joined body 100 is not limited to be used as an insulating circuit board, but can be widely applied to various uses, such as heat sinks and components of internal combustion engines and power generating machines. In these cases as well, the same effects as those of the above-described embodiments can be obtained.

### Examples

In this example, the prepared brazing material was used to join a metal member and a ceramic member, or to join two metal members together, and the joining strength of the resulting joined body was evaluated. Specifically, the following applies:

### (1) Preparation

As metal members, a 2.0 mm thick copper material composed of oxygen-free copper, a 6.0 mm thick iron alloy material (42ALLOY), and a 6.0 mm thick steel material (SUS304) were prepared. As ceramic members, a 0.3 mm thick silicon nitride (Si₃N₄) sheet, a 0.3 mm thick silicon carbide (SiC) sheet, a 0.3 mm thick AlN sheet, a 0.3 mm thick Al₂O₃ sheet, and a 0.3 mm thick diamond sheet were prepared.

Further, as powders for preparing the brazing material, powders containing Cu, Mg, a Mg evaporation inhibiting element, and an active metal element were prepared. Specifically, as the powder containing Cu, a pure Cu powder was prepared. As the powder containing Mg or an Mg evaporation inhibiting element, five types of alloy powders were prepared: an alloy powder composed of Cu₄MgSn and Cu, an alloy powder composed of CuMgSb and Cu, an alloy powder composed of CuMgBi and Cu, an alloy powder composed of Cu₂Mg and Cu, and an alloy powder composed of Cu₃Sn and Cu. As the powder containing Mg, a simple metal powder of Mg was prepared. As the powder containing an active metal element, TiH₂ powder, an alloy powder composed of CuCaSn and Cu, an alloy powder composed of CuMgY, Cu₂Mg and Cu, and an alloy powder composed of Cu₆Ce, Cu₂Mg and Cu were prepared. An average particle size (D50) of each powder was set to 45 µm or less. The alloy powders were produced by atomization.

### (2) Preparation of the brazing material

First, the above powders were mixed so that the contents of Cu, Mg, the Mg evaporation inhibiting elements, and the active metal elements were as shown in tables 1 to 6, and then the mixture was converted into a paste to prepare brazing materials of samples 1 to 42 and 45 to 232. In samples 214 to 232, any one of the active metal elements Cr, Mo, V, Nb, and Zr, which will be described later, is contained. In converting into a paste, polyethylene glycol and diethylene glycol monobutyl ether having a molecular weight of 400 or less were used as solvents, and the ratio of the solvents in the paste was set to 9 mass%. The brazing material of sample 43 was prepared in the same manner as samples 1 to 42, except that the Cu and Mg evaporation inhibiting elements were not added. The brazing material of sample 44 was prepared in the same manner as samples 1 to 42, except that only Mg simple metal powder was used. In tables 1 to 5, content X indicates the Mg content [at.%], and content Y indicates a total content [at.%] of the Mg evaporation inhibiting elements.

**[Table 1]**

| Sample No. | Brazing element ratio[at %] | | | | | | | | Type of first member | Type of second member | Evaluation | |
|---|---|---|---|---|---|---|---|---|---|---|---|---|
| | | | | | | | | | | | Shear strength [MPa] | Tensile strength [MPa] |
| | Cu | Mg | Sn | Sb | Bi | Ti | Content X[at. %] | Content Y[at. %] | | | | |
| 1 | Bal. | 9.3 | 9.6 | - | - | 3.9 | 9.3 | 9.6 | Cu | Si₃N₄ | 186.4 | 322.9 |
| 2 | Bal. | 8.3 | 8.6 | - | - | 3.9 | 8.3 | 8.6 | Cu | Si₃N₄ | 173.9 | 301.2 |
| 3 | Bal. | 6.4 | 6.6 | - | - | 3.9 | 6.4 | 6. 6 | Gu | Si₃N₄ | 211.1 | 365.6 |
| 4 | Bal | 5.4 | 5.6 | - | - | 3.8 | 5.4 | 5.6 | Cu | Si₃N₄ | 155.9 | 270 |
| 5 | Bal | 4.4 | 4.6 | - | - | 3.8 | 4.4 | 4.6 | Cu | Si₃N₄ | 111 | 192.3 |
| 6 | Bal. | 3.5 | 3.6 | - | - | 3.8 | 3.5 | 3.6 | Cu | Si₃N₄ | 119.3 | 206.6 |
| 7 | Bal. | 2.5 | 2.6 | - | - | 3.8 | 2.5 | 2.6 | Cu | Si₃N₄ | 104.3 | 180.7 |
| 8 | Bal. | 10.5 | - | 9.7 | - | 3.6 | 10.5 | 9.7 | Cu | Si₃N₄ | 139.5 | 241.6 |
| 9 | Bal. | 9.5 | - | 8.7 | - | 3.6 | 9. 5 | 8.7 | Cu | Si₃N₄ | 140.3 | 243 |
| 10 | Bal. | 7.4 | - | 6.8 | - | 3.7 | 7.4 | 6.8 | Cu | Si₃N₄ | 137.5 | 238.2 |
| 11 | Bal. | 6.3 | - | 5.8 | - | 3.7 | 6.3 | 5.8 | Cu | Si₃N₄ | 152.5 | 264.1 |
| 12 | Bal. | 5.2 | - | 4.8 | - | 3.7 | 5.2 | 4. 8 | Cu | Si₃N₄ | 156.1 | 270.4 |
| 13 | Bal. | 4.1 | - | 3. 8 | - | 3.7 | 4.1 | 3.8 | Cu | Si₃N₄ | 153.2 | 265.4 |
| 14 | Bal. | 3.0 | - | 2.8 | - | 3.7 | 3.0 | 2.8 | Cu | Si₃N₄ | 169.4 | 293.4 |
| 15 | Bal. | 4.4 | - | - | 5.5 | 4. 1 | 4.4 | 5.5 | Cu | Si₃N₄ | 24.8 | 43 |
| 16 | Bal. | 3.5 | - | - | 4.4 | 4.1 | 3.5 | 4.4 | Cu | Si₃N₄ | 45.7 | 79.2 |
| 17 | Bal. | 2.7 | - | - | 3.4 | 4.0 | 2.7 | 3.4 | Cu | Si₃N₄ | 59.4 | 102.9 |
| 18 | Bal. | 2.0 | - | - | 2.5 | 3.9 | 2.0 | 2.5 | Cu | Si₃N₄ | 93.2 | 161.4 |
| 19 | Bal. | 10 | 10 | - | - | 3 | 10.0 | 10.0 | Cu | Si₃N₄ | 100 | 173 |
| 20 | Bal. | 8.5 | 8.5 | - | - | 3 | 8.5 | 8.5 | Cu | Si₃N₄ | 141 | 244 |
| 21 | Bal. | 8 | 8 | - | - | 3 | 8.0 | 8.0 | Cu | Si₃N₄ | 143 | 248 |
| 22 | Bal. | 10 | 8 | - | - | 3 | 10.0 | 8.0 | Cu | Si₃N₄ | 90 | 156 |
| 23 | Bal. | 8 | 10 | - | - | 3 | 8.0 | 10.0 | Cu | Si₃N₄ | 87 | 151 |
| 24 | Bal. | 8 | 6 | - | - | 3 | 8.0 | 6.0 | Cu | Si₃N₄ | 74 | 128 |
| 25 | Bal. | 8 | - | 8 | - | 3 | 8.0 | 8.0 | Cu | Si₃N₄ | 150 | 260 |
| 26 | Bal | 9.4 | 8.5 | 1.1 | - | 3.9 | 9.4 | 9.6 | Cu | Si₃N₄ | 144.4 | 250.1 |
| 27 | Bal. | 9.6 | 7.5 | 2.1 | - | 3.8 | 9.6 | 9.6 | Cu | Si₃N₄ | 151.3 | 262.1 |
| 28 | Bal. | 9.7 | 6.4 | 3.2 | - | 3.8 | 9.7 | 9.6 | Cu | Si₃N₄ | 152.3 | 263.8 |
| 29 | Bal | 9.8 | 5.4 | 4.2 | - | 3.8 | 9.8 | 9.6 | Cu | Si₃N₄ | 141.4 | 244.9 |
| 30 | Bal. | 10.1 | 3.5 | 6.2 | - | 3.7 | 10.1 | 9.6 | Cu | Si₃N₄ | 133.5 | 231.2 |
| 31 | Bal. | 10.2 | 2.5 | 7.1 | - | 3.7 | 10.2 | 9.7 | Cu | Si₃N₄ | 134.7 | 233.3 |
| 32 | Bal. | 10.3 | 1.6 | 8.1 | - | 3.7 | 10.3 | 9.7 | Cu | Si₃N₄ | 133.8 | 231.7 |
| 33 | Bal. | 10.4 | 0.9 | 8.8 | - | 3.6 | 10.4 | 9.7 | Cu | Si₃N₄ | 134.6 | 233.1 |
| 34 | Bal. | 8 | - | 8 | - | 3 | 8.0 | 8.0 | Cu | SUS304 | 169 | 293 |
| 35 | Bal | 8 | 8 | - | - | 3 | 8.0 | 8.0 | Gu | SUS304 | 211 | 365 |
| 36 | Bal. | 8 | 8 | - | - | 3 | 8.0 | 8.0 | Cu | AlN | 119 | 206 |
| 37 | Bal. | 8 | 8 | - | - | 3 | 8.0 | 8.0 | Cu | Al2O3 | 218 | 378 |
| 38 | Bal. | 8.3 | 8.6 | - | - | 3.9 | 8.3 | 8.6 | Cu | SiC | 99 | 171.5 |
| 39 | Bal. | 8.3 | 8.6 | - | - | 3.9 | 8.3 | 8.6 | Cu | Diamond | 117 | 202.6 |
| 40 | Bal. | 7 | 7 | - | - | 3 | 7.0 | 7.0 | 42alloy | Si₃H₄ | 91 | 158 |
| 41 | Bal. | 8 | 8 | - | - | 3 | 8.0 | 8.0 | 42alloy | Si₃N₄ | >100 | 173 |
| 42 | Bal | 8 | - | 8 | - | 3 | 8.0 | 8.0 | 42alloy | Si₃N₄ | >100 | 173 |
| 43 | - | 97.0 | - | - | - | 3.0 | 97.0 | 0.0 | Cu | Si₃N₄ | 0.5 | 0.9 |
| 44 | - | 100.0 | - | - | - | - | 100.0 | 0.0 | Cu | Si₃N₄ | 0.1 | 0.2 |

**[Table 2]**

| Sample No. | Brazing element ratio[at.%] | | | | | | | | Type of first member | Type of second member | Evaluation | |
|---|---|---|---|---|---|---|---|---|---|---|---|---|
| | | | | | | | | | | | Shear strength [MPa] | Tensile strength [MPa] |
| | Cu | Mg | Sn | Sb | Bi | Ti | Content X[at %] | Content Y[at %] | | | | |
| 45 | Bal. | 13.9 | 18.1 | 0 | 0 | 4.1 | 13.9 | 18.1 | Cu | Si₄N₄ | 70 6 | 122.3 |
| 46 | Bal. | 11.3 | 14.8 | 0 | 0 | 4.0 | 11.3 | 14.8 | Cu | Si₃N₄ | 72.8 | 126.1 |
| 47 | Bal. | 8.8 | 11.5 | 0 | 0 | 4.0 | 8.8 | 11.5 | Cu | Si₃N₄ | 79 | 136.8 |
| 48 | Bal. | 15.0 | 13.8 | 0 | 0 | 3.9 | 15.0 | 13.8 | Cu | Si₃N₄ | 174.1 | 301.6 |
| 49 | Bal. | 15.0 | 12.1 | 0 | 0 | 3.9 | 15.0 | 12.1 | Cu | Si₃N₄ | 202.8 | 351.3 |
| 50 | Bal. | 14 9 | 10.1 | 0 | 0 | 3.8 | 14.9 | 10.1 | Cu | Si₃N₄ | 210.7 | 364.9 |
| 51 | Bal. | 12.0 | 10.6 | 0 | 0 | 3.9 | 12.0 | 10.6 | Cu | Si₃N₄ | 200.5 | 347.3 |
| 52 | Bal. | 12.0 | 9.0 | 0 | 0 | 3.8 | 12.0 | 9.0 | Cu | Si₃N₄ | 210 | 363.7 |
| 53 | Bal. | 12.0 | 7.4 | 0 | 0 | 3.8 | 12.0 | 7.4 | Cu | Si₃N₄ | 167.3 | 289.8 |
| 54 | Bal. | 8.9 | 7.5 | 0 | 0 | 3.8 | 8.9 | 7 5 | Cu | Si₃N₄ | 181.7 | 314.7 |
| 55 | Bal. | 8.9 | 5.9 | 0 | 0 | 3.8 | 8.9 | 5.9 | Cu | Si₃N₄ | 130.5 | 226 |
| 56 | Bal. | 8.9 | 4.4 | 0 | 0 | 3.7 | 8.9 | 4 4 | Cu | Si₃N₄ | 109.9 | 190.4 |
| 57 | Bal. | 6.5 | 4.5 | 0 | 0 | 3.8 | 6.5 | 4 5 | Cu | Si₃N₄ | 95.5 | 165.4 |
| 58 | Bal. | 6.5 | 2.9 | 0 | 0 | 3.7 | 6.5 | 2.9 | Cu | Si₃N₄ | 78 7 | 136.3 |
| 59 | Bal. | 14.7 | 19.7 | 0 | 0 | 6.8 | 14.7 | 19.7 | Cu | Si₃N₄ | 74 3 | 128.7 |
| 60 | Bal. | 12 7 | 17 4 | 0 | 0 | 6.7 | 12.7 | 17.4 | Cu | Si₃N₄ | 93.6 | 162.1 |
| 61 | Bal. | 12.5 | 14.6 | 0 | 0 | 6.6 | 12.5 | 14.6 | Cu | Si₃N₄ | 137.9 | 238.8 |
| 62 | Bal. | 10.2 | 15.1 | 0 | 0 | 6 7 | 10.2 | 15.1 | Cu | Si₃N₄ | 111.1 | 192.4 |
| 63 | Bal. | 10.3 | 12.3 | 0 | 0 | 6.6 | 10.3 | 12.3 | Cu | Si₃N₄ | 188.4 | 326.3 |
| 64 | Bal. | 5.2 | 9.2 | 0 | 0 | 6.6 | 5.2 | 9.2 | Cu | Si₃N₄ | 170 1 | 294.6 |
| 65 | Bal. | 4 7 | 7 0 | 0 | 0 | 6.5 | 4.7 | 7.0 | Cu | Si₃N₄ | 80.7 | 139.8 |
| 66 | Bal. | 9.6 | 9.1 | 0 | 0 | 2.6 | 9.6 | 9.1 | Cu | Si₃N₄ | 78.3 | 135.6 |
| 67 | Bal. | 9.5 | 9.0 | 0 | 0 | 8 9 | 9.5 | 9.0 | Cu | Si₃N₄ | 94 | 162.8 |
| 68 | Bal. | 14 4 | 15.4 | 0 | 0 | 9.2 | 14.4 | 15.4 | Cu | Si₃N₄ | 81.8 | 141.7 |
| 69 | Bal. | 14.6 | 0 | 14.8 | 0 | 4.0 | 14.6 | 14.8 | Cu | Si₃N₄ | 59 1 | 102.4 |
| 70 | Bal. | 12.6 | 0 | 12.8 | 0 | 3.9 | 12.6 | 12.8 | Cu | Si₃N₄ | 67.8 | 117.4 |
| 71 | Bal. | 10 7 | 0 | 10 9 | 0 | 3.9 | 10.7 | 10.9 | Cu | Si₃N₄ | 91 2 | 158 |
| 72 | Bal. | 8.8 | 0 | 8. 9 | 0 | 3.9 | 8.8 | 8.9 | Cu | Si₃N₄ | 87.6 | 151.7 |
| 73 | Bal. | 14 8 | 0 | 13 7 | 0 | 3.9 | 14.8 | 13.7 | Cu | Si₃N₄ | 108.6 | 188.1 |
| 74 | Bal. | 14.8 | 0 | 11.8 | 0 | 3.9 | 14.8 | 11.8 | Cu | Si₃N₄ | 104.9 | 181.7 |
| 75 | Bal. | 14.6 | 0 | 9.6 | 0 | 3.8 | 14.6 | 9.6 | Cu | Si₃N₄ | 109.8 | 190.2 |
| 76 | Bal. | 10.6 | 0 | 9.4 | 0 | 3.9 | 10.6 | 9.4 | Cu | Si₃N₄ | 116.9 | 202.5 |
| 77 | Bal. | 10 3 | 0 | 7 8 | 0 | 3 8 | 10.3 | 7 8 | Cu | Si₃N₄ | 144 2 | 249.8 |
| 78 | Bal. | 10.1 | 0 | 5. 9 | 0 | 3.8 | 10.1 | 5 9 | Cu | Si₃N₄ | 170 | 294.4 |
| 79 | Bal. | 5.9 | 0 | 4.6 | 0 | 3.8 | 5.9 | 4.6 | Cu | Si₃N₄ | 169.2 | 293.1 |
| 80 | Bal. | 6.5 | 0 | 2 7 | 0 | 3.7 | 6.5 | 2.7 | Cu | Si₃N₄ | 161 1 | 279 |
| 81 | Bal. | 9.2 | 0 | 9.4 | 0 | 9 0 | 9.2 | 9.4 | Cu | Si₃N₄ | 102 1 | 176.8 |
| 82 | Bal. | 6 2 | 0 | 0 | 2.2 | 3.8 | 6.2 | 2 2 | Cu | Si₃N₄ | 57.3 | 99.2 |
| 83 | Bal. | 7 6 | 5.5 | 2.1 | 0 | 3.8 | 7.6 | 7.6 | Cu | Si₃N₄ | 99.8 | 172.9 |
| 84 | Bal. | 7 9 | 3.5 | 4.2 | 0 | 3.7 | 7.9 | 7 7 | Cu | Si₃N₄ | 88 6 | 153.5 |
| 85 | Bal. | 8.2 | 1.9 | 5 8 | 0 | 3.7 | 8.2 | 7 7 | Cu | Si₃N₄ | 113.5 | 196.6 |

**[Table 3]**

| Sample No. | Brazing element ratio[at.%] | | | | | | | | Type of first member | Type of second member | Evaluation | |
|---|---|---|---|---|---|---|---|---|---|---|---|---|
| | | | | | | | | | | | Shea r strength [MPa] | Tensile strength [MPa] |
| | Cu | Mg | Sn | Sb | Bi | Ti | Content X[at %] | Content Y[at %] | | | | |
| 86 | Bal. | 5 7 | 3 6 | 2 1 | 0 | 3 8 | 5 7 | 5 7 | Cu | Si₃N₄ | 164.4 | 284. 7 |
| 87 | Bal. | 6. 0 | 1.9 | 3.8 | 0 | 3.7 | 6.0 | 5. 7 | Cu | Si₃N₄ | 146 | 252.9 |
| 88 | Bal. | 3 8 | 1.9 | 1.8 | 0 | 3.8 | 3.8 | 3.7 | Cu | Si₃N₄ | 166.5 | 288. 4 |
| 89 | Bal. | 10.7 | 8.1 | 2.8 | 0 | 3.9 | 10. 7 | 11.0 | Cu | Si₃N₄ | 135.3 | 234.3 |
| 90 | Bal. | 12 1 | 6 7 | 5. 7 | 0 | 3.9 | 12 1 | 12.4 | Cu | Si₃N₄ | 116.6 | 202 |
| 91 | Bal. | 13.6 | 5.2 | 8.6 | 0 | 3.9 | 13.6 | 13 8 | Cu | Si₃N₄ | 98 4 | 170.4 |
| 92 | Bal. | 15 0 | 3.7 | 11.6 | 0 | 4.0 | 15 0 | 15.3 | Cu | Si₃N₄ | 119 6 | 207.2 |
| 93 | Bal. | 14.5 | 11.2 | 3.2 | 0 | 3.8 | 14. 5 | 14 4 | Cu | Si₃N₄ | 65 7 | 113.8 |
| 94 | Bal. | 13.6 | 8 5 | 4.7 | 0 | 3 8 | 13. 6 | 13.3 | Cu | Si₃N₄ | 65.2 | 112.9 |
| 95 | Bal. | 12.7 | 6.0 | 6.2 | 0 | 3.7 | 12.7 | 12.2 | Cu | Si₃N₄ | 66 | 114.3 |
| 96 | Bal. | 9 7 | 5.1 | 4 7 | 0 | 3.9 | 9. 7 | 9.9 | Cu | Si₃N₄ | 140 1 | 242. 7 |
| 97 | Bal. | 11.1 | 3.7 | 7 6 | 0 | 3. 9 | 11.1 | 11.3 | Cu | Si₃N₄ | 147.5 | 255.5 |
| 98 | Bal. | 12.5 | 2. 2 | 10.5 | 0 | 3.9 | 12.5 | 12.7 | Cu | Si₃N₄ | 116.8 | 202. 3 |
| 99 | Bal. | 9 6 | 1.2 | 8 5 | 0 | 3.9 | 9 6 | 9.7 | Cu | Si₃N₄ | 130.3 | 225. 7 |
| 100 | Bal. | 13.2 | 11 4 | 1.9 | 0 | 3.9 | 13. 2 | 13.3 | Cu | Si₃N₄ | 192. 7 | 333. 8 |
| 101 | Bal. | 13.5 | 8.9 | 4 8 | 0 | 3.9 | 13.5 | 13.7 | Cu | Si₃N₄ | 178.3 | 308. 8 |
| 102 | Bal. | 13. 8 | 6. 3 | 7. 7 | 0 | 3. 9 | 13. 8 | 14 0 | Cu | Si₃N₄ | 163. 5 | 283. 2 |
| 103 | Bal. | 14.2 | 3.8 | 10 6 | 0 | 4 0 | 14.2 | 14.3 | Cu | Si₃N₄ | 130.1 | 225.3 |
| 104 | Bal. | 10.1 | 4.6 | 5 7 | 0 | 3.9 | 10. 1 | 10.3 | Cu | Si₃N₄ | 186. 3 | 322. 7 |
| 105 | Bal. | 10.4 | 2. 0 | 8 6 | 0 | 3.9 | 10 4 | 10.6 | Cu | Si₃N₄ | 134.7 | 233.3 |
| 106 | Bal. | 14 2 | 8.5 | 7.8 | 0 | 40 | 14.2 | 16.3 | Cu | Si₃N₄ | 103 | 178. 4 |
| 107 | Bal. | 13.3 | 3 7 | 10.6 | 0 | 4 0 | 13.3 | 14.3 | Cu | Si₃N₄ | 102. 7 | 177.9 |
| 108 | Bal. | 14.9 | 9.7 | 2.8 | 0 | 3.9 | 14 9 | 12.5 | Cu | Si₃N₄ | 132. 4 | 229.3 |
| 109 | Bal. | 14.9 | 6.4 | 6.4 | 0 | 3.9 | 14. 9 | 12.8 | Cu | Si₃N₄ | 143.9 | 249.2 |
| 110 | Bal. | 14.8 | 3.0 | 9. 4 | 0 | 3.9 | 14.8 | 12.5 | Cu | Si₃N₄ | 121. 1 | 209.8 |
| 111 | Bal. | 14 8 | 7.4 | 2.8 | 0 | 3.8 | 14 8 | 10.2 | Cu | Si₃N₄ | 168. 8 | 292.4 |
| 112 | Bal. | 14.9 | 5.1 | 5. 0 | 0 | 3.8 | 14.9 | 10.0 | Cu | Si₃N₄ | 155. 4 | 269. 2 |
| 113 | Bal. | 14 8 | 2.7 | 7.2 | 0 | 3.8 | 14. 8 | 9 9 | Cu | Si₃N₄ | 137 | 237. 3 |
| 114 | Bal. | 10.0 | 5.1 | 2. 8 | 0 | 3.8 | 10.0 | 7.9 | Cu | Si₃N₄ | 152.2 | 263. 6 |
| 115 | Bal. | 9. 9 | 3.9 | 3. 9 | 0 | 3.8 | 9.9 | 7.8 | Cu | Si₃N₄ | 141.9 | 245. 8 |
| 116 | Bal. | 10.0 | 2. 7 | 5.2 | 0 | 3.8 | 10. 0 | 7.9 | Cu | Si₃N₄ | 162.2 | 280.9 |
| 117 | Bal. | 10.0 | 3. 2 | 1.8 | 0 | 3.7 | 10.0 | 5.0 | Cu | Si₃N₄ | 122. 4 | 212 |
| 118 | Bal. | 9.9 | 1.8 | 3.1 | 0 | 3.7 | 9.9 | 4.8 | Cu | Si₃N₄ | 128.3 | 222. 2 |
| 119 | Bal. | 6.0 | 1.8 | 1 8 | 0 | 3.8 | 6. 0 | 3.6 | Cu | Si₃N₄ | 149.2 | 258.4 |
| 120 | Bal. | 14.9 | 15.2 | 3.9 | 0 | 6. 8 | 14.9 | 19.2 | Cu | Si₃N₄ | 51.7 | 89.5 |
| 121 | Bal. | 14 7 | 11.7 | 8.0 | 0 | 6.8 | 14. 7 | 19. 7 | Cu | Si₃N₄ | 78.2 | 135.4 |
| 122 | Bal. | 11.2 | 12.3 | 3. 9 | 0 | 6. 7 | 11.2 | 16. 3 | Cu | Si₃N₄ | 122. 1 | 211.5 |
| 123 | Bal. | 10.4 | 8.5 | 6. 9 | D | 6.7 | 10. 4 | 15. 4 | Cu | Si₃N₄ | 99.6 | 172. 5 |
| 124 | Bal. | 10.1 | 5.9 | 7 8 | 0 | 6.7 | 10. 1 | 13.7 | Cu | Si₃N₄ | 114.5 | 198.3 |
| 125 | Bal. | 6. 2 | 6.8 | 3. 9 | 0 | 6.6 | 6. 2 | 10.7 | Cu | Si₃N₄ | 133.1 | 230. 5 |
| 126 | Bal. | 6. 9 | 4. 3 | 5. 8 | 0 | 6.6 | 6.9 | 10.0 | Cu | Si₃N₄ | 138.4 | 239. 7 |

**[Table 4]**

| Sample No. | Brazing element ratio[at.%] | | | | | | | | Type of first member | Type of second member | Evaluation | |
|---|---|---|---|---|---|---|---|---|---|---|---|---|
| | | | | | | | | | | | Shear strength [MPa] | Tensile strength [MPa] |
| | Cu | Mg | Sn | Sb | Bi | Ti | Content X[at.%] | Con ten: Y[at.%] | | | | |
| 127 | Bal. | 13.3 | 7.0 | 6.6 | 0 | 91 | 13.3 | 13.7 | Cu | Si₃N₄ | 58.4 | 101.2 |
| 128 | Bal. | 9.2 | 87 | 0 | 0.9 | 3.9 | 9.2 | 9.6 | Cu | Si₃N₄ | 116.3 | 201.4 |
| 129 | Bal. | 9.0 | 7.8 | 0 | 1.8 | 4.0 | 9.0 | 9.6 | Cu | Si₃N₄ | 115.1 | 199.4 |
| 130 | Bal. | 8.9 | 6.9 | 0 | 2.8 | 4.0 | 8.9 | 9.7 | Cu | Si₃N₄ | 123.6 | 214.1 |
| 131 | Bal. | 8.8 | 5.9 | 0 | 3.8 | 4.1 | 8.8 | 9.7 | Cu | Si₃N₄ | 122.7 | 212.5 |
| 132 | Bal. | 8.6 | 4.9 | 0 | 4.8 | 4.1 | 8.6 | 9.7 | Cu | Si₃N₄ | 1213 | 210.1 |
| 133 | Bal. | 8.5 | 3.9 | 0 | 5.8 | 4.2 | 8.5 | 9.8 | Cu | Si₃N₄ | 103.3 | 178.9 |
| 134 | Bal. | 8.3 | 2.9 | 0 | 6.9 | 43 | 8.3 | 9.8 | Cu | Si₃N₄ | 102.3 | 177.2 |
| 135 | Bal. | 8.2 | 1.9 | 0 | 8.0 | 4.3 | 8.2 | 9.9 | Cu | Si₃N₄ | 99.8 | 172.9 |
| 136 | Bal. | 8.1 | 1.1 | 0 | 8.8 | 4.4 | 8.1 | 9.9 | Cu | Si₃N₄ | 104.7 | 181.3 |
| 137 | Bal. | 7.0 | 5.7 | 0 | 1.8 | 4.0 | 7.0 | 7.6 | Cu | Si₃N₄ | 70.1 | 121.4 |
| 138 | Bal. | 6.7 | 3.8 | 0 | 3.8 | 4.1 | 6.7 | 7.6 | Cu | Si₃N₄ | 24 | 41.6 |
| 139 | Bal. | 6.4 | 2.1 | 0 | 5.5 | 4.2 | 6.4 | 7.6 | Cu | Si₃N₄ | 84.3 | 146 |
| 140 | Bal. | 5.1 | 3.7 | 0 | 1.8 | 3.9 | 5.1 | 5.5 | Cu | Si₃N₄ | 88 | 152.4 |
| 141 | Bal. | 4.7 | 2.0 | 0 | 3.5 | 4.0 | 4.7 | 5.5 | Cu | Si₃N₄ | 102.9 | 178.2 |
| 142 | Bal. | 3.2 | 2.0 | 0 | 1.5 | 3.9 | 3.2 | 3.5 | Cu | Si₃N₄ | 98.6 | 170.8 |
| 143 | Bal. | 14.1 | 11.9 | 0 | 2.8 | 4.1 | 14.1 | 14.7 | Cu | Si₃N₄ | 56.2 | 97.3 |
| 144 | Bal. | 12.8 | 9.4 | 0 | 4.3 | 4.2 | 12.8 | 13.7 | Cu | Si₃N₄ | 53.8 | 93.2 |
| 145 | Bal. | 11.4 | 6.8 | 0 | 5.9 | 4.2 | 11.4 | 12.7 | Cu | Si₃N₄ | 69 | 119.5 |
| 146 | Bal | 14.9 | 18.4 | 0 | 1.0 | 4.1 | 14.9 | 19.4 | Cu | Si₃N₄ | 129.1 | 223.6 |
| 147 | Bal | 12.4 | 13.6 | 0 | 2.4 | 4.1 | 12.4 | 16.0 | Cu | Si₃N₄ | 114.9 | 199 |
| 148 | Bal. | 14.9 | 11.4 | 0 | 1.1 | 3.9 | 14.9 | 12.5 | Cu | Si₃N₄ | 147.9 | 256.2 |
| 149 | Bal. | 15.0 | 9.0 | 0 | 1.1 | 3.8 | 15.0 | 10.1 | Cu | Si₃N₄ | 125.3 | 217 |
| 150 | Bal. | 10.1 | 6.4 | 0 | 1.1 | 3.9 | 10.1 | 7.4 | Cu | Si₃N₄ | 128.2 | 222 |
| 151 | Bal. | 9.9 | 3.9 | 0 | 1.1 | 3.8 | 9.9 | 4.0 | Cu | Si₃N₄ | 104.5 | 181 |
| 152 | Bal. | 14.5 | 17.7 | 0 | 1.1 | 6.8 | 14.5 | 18.8 | Cu | Si₃N₄ | 79.6 | 137.9 |
| 153 | Bal. | 10.8 | 14.7 | 0 | 1.1 | 6.8 | 10.8 | 15.9 | Cu | Si₃N₄ | 84.1 | 145.7 |
| 154 | Bal. | 10.6 | 12.6 | 0 | 1.1 | 67 | 10.6 | 13.7 | Cu | Si₃N₄ | 88 | 149 |
| 155 | Bal. | 6.9 | 9.7 | 0 | 1.1 | 6.7 | 6.9 | 10.8 | Cu | Si₃N₄ | 53.4 | 92.5 |
| 156 | Bal. | 10.3 | 0 | 9.9 | 0.9 | 3.7 | 10.3 | 9.7 | Gu | Si₃N₄ | 129.3 | 224 |
| 157 | Bal. | 10.1 | 0 | 8.0 | 1.7 | 3.7 | 10.1 | 9.7 | Cu | Si₃N₄ | 108.6 | 188.1 |
| 158 | Bal. | 9.8 | 0 | 7.1 | 2.7 | 3.8 | 9.8 | 9.8 | Cu | Si₃N₄ | 121 | 209.6 |
| 159 | Bal. | 9.6 | 0 | 6.2 | 3.6 | 3.9 | 9.6 | 9.8 | Cu | Si₃N₄ | 97.6 | 169 |
| 160 | Bal. | 9.3 | 0 | 5.2 | 4.6 | 4.0 | 9.3 | 9.8 | Cu | Si₃N₄ | 106.2 | 183.9 |
| 161 | Bal. | 9.0 | 0 | 4.2 | 5.7 | 4.1 | 9.0 | 9.8 | Cu | Si₃N₄ | 113.5 | 196.6 |
| 162 | Bal. | 8.8 | 0 | 3.1 | 6.7 | 4.2 | 8.8 | 9.9 | Cu | Si₃N₄ | 83.5 | 144.6 |
| 163 | Bal. | 8.5 | 0 | 2.0 | 7.9 | 4.3 | 8.5 | 9.9 | Cu | Si₃N₄ | 105.9 | 183.4 |
| 164 | Bal. | 8.2 | 0 | 1.2 | 8.7 | 4.3 | 8.2 | 9.9 | Cu | Si₃N₄ | 101 | 174.9 |
| 165 | Bal. | 7.9 | 0 | 6.0 | 1.8 | 3.8 | 7.9 | 7.7 | Cu | Si₃N₄ | 116 | 200.9 |
| 166 | Bal. | 7.3 | 0 | 4.0 | 3.7 | 3.9 | 7.3 | 7.7 | Cu | Si₃N₄ | 106.5 | 184.5 |
| 167 | Bal. | 6.8 | 0 | 2.3 | 5.4 | 4.1 | 6.8 | 7.7 | Cu | Si₃N₄ | 106.3 | 184.1 |

**[Table 5]**

| Sample No. | Brazing element ratio[at. %] | | | | | | | | Type of first member | Type of second member | Evaluation | |
|---|---|---|---|---|---|---|---|---|---|---|---|---|
| | | | | | | | | | | | Shear strength [MPa] | Tensile strength [MPa] |
| | Cu | Mg | Sn | Sb | Bi | Ti | Content X [at. %] | Content Y [at. %] | | | | |
| 168 | Bal. | 5.7 | 0 | 3.9 | 1.8 | 3.8 | 5.7 | 5.7 | Cu | Si₃N₄ | 138.2 | 239.4 |
| 169 | Bal. | 5.1 | 0 | 2.2 | 3.4 | 4.0 | 5.1 | 5.6 | Cu | Si₃N₄ | 118.8 | 205.8 |
| 170 | Bal. | 3.5 | 0 | 2.1 | 1.5 | 3.8 | 3.5 | 3.6 | Cu | Si₃N₄ | 130.2 | 225.5 |
| 171 | Bal. | 13.9 | 0 | 10.6 | 4.4 | 4.2 | 13.9 | 15.0 | Cu | Si₃N₄ | 119.3 | 206.6 |
| 172 | Bal. | 12.3 | 0 | 7.7 | 5.9 | 4.3 | 12.3 | 13.6 | Cu | Si₃N₄ | 117.4 | 203.3 |
| 173 | Bal. | 11.6 | 0 | 11.0 | 0.9 | 4.0 | 11.6 | 11.9 | Cu | Si₃N₄ | 106.1 | 183.8 |
| 174 | Bal. | 10.0 | 0 | 8.2 | 2.3 | 4.0 | 10.0 | 10.6 | Cu | Si₃N₄ | 110.5 | 191.4 |
| 175 | Bal. | 14.8 | 0 | 11.5 | 1.1 | 3.9 | 14.8 | 12.6 | Cu | Si₃N₄ | 130.2 | 225.5 |
| 176 | Bal. | 14.9 | 0 | 8.8 | 11 | 3.9 | 14.9 | 9.9 | Cu | Si₃N₄ | 1211 | 209.8 |
| 177 | Bal. | 10.0 | 0 | 6.4 | 1.1 | 3.9 | 10.0 | 7.5 | Cu | Si₃N₄ | 139.7 | 242 |
| 178 | Bal. | 9.9 | 0 | 4.1 | 1.1 | 3.8 | 9.9 | 5.1 | Cu | Si₃N₄ | 120.4 | 208.5 |
| 179 | Bal. | 14.3 | 15.3 | 1.0 | 1.9 | 4.2 | 14.3 | 18.2 | Cu | Si₃N₄ | 111.1 | 192.4 |
| 180 | Bal. | 13.6 | 8.7 | 5.0 | 2.4 | 4.1 | 13.6 | 16.1 | Cu | S₃N₄ | 129.7 | 224.6 |
| 181 | Bal. | 11.9 | 8.9 | 2.0 | 3.9 | 4.2 | 11.9 | 14.8 | Cu | Si₃N₄ | 93.7 | 162.3 |
| 182 | Bal. | 12.8 | 9.9 | 1.9 | 1.4 | 4.0 | 12.8 | 13.2 | Cu | Si₃N₄ | 109.1 | 189 |
| 183 | Bal. | 11.1 | 6.6 | 2.0 | 3.3 | 4.1 | 11.1 | 11.9 | Cu | Si₃N₄ | 89.4 | 154.8 |
| 184 | Bal. | 12.2 | 6.5 | 3.9 | 2.3 | 4.1 | 12.2 | 12.8 | Cu | Si₃N₄ | 104.2 | 180.5 |
| 185 | Bal. | 13.3 | 6.4 | 5.8 | 1.4 | 4.0 | 13.3 | 13.7 | Cu | Si₃N₄ | 107.1 | 185.5 |
| 186 | Bal. | 8.9 | 3.1 | 2.0 | 4.8 | 4.2 | 8.9 | 9.9 | Cu | Si₃N₄ | 83.4 | 144.5 |
| 187 | Bal. | 10.5 | 3.0 | 5.0 | 3.3 | 4.1 | 10.5 | 11.3 | Cu | Si₃N₄ | 119.6 | 207.2 |
| 188 | Bal. | 12.2 | 3.0 | 7.8 | 1.9 | 4.0 | 12.2 | 12.7 | Cu | Si₃N₄ | 117.6 | 203.7 |
| 189 | Bal. | 9.1 | 5.3 | 1.7 | 2.8 | 4.0 | 91 | 9.7 | Cu | Si₃N₄ | 105.7 | 183.1 |
| 190 | Bal. | 9.5 | 5.1 | 3.2 | 1.3 | 3.9 | 9.5 | 9.7 | Cu | Si₃N₄ | 117 | 202.6 |
| 191 | Bal. | 8.9 | 3.8 | 1.7 | 4.2 | 41 | 8.9 | 97 | Cu | Si₃N₄ | 104.3 | 180.7 |
| 192 | Bal. | 9.3 | 3.7 | 3.3 | 2.7 | 3.9 | 9.3 | 9.7 | Cu | Si₃N₄ | 116.5 | 201.8 |
| 193 | Bal. | 9.7 | 3.6 | 4.8 | 1.3 | 3.8 | 9.7 | 9.7 | Cu | Si₃N₄ | 123.6 | 214.1 |
| 194 | Bal. | 9.1 | 1.7 | 3.4 | 4.7 | 4.0 | 9.1 | 9.8 | Cu | Si₃N₄ | 106.8 | 185 |
| 195 | Bal. | 9.5 | 1.7 | 4.9 | 3.2 | 3.9 | 9.5 | 97 | Cu | Si₃N₄ | 130.5 | 226 |
| 196 | Bal. | 9.9 | 1.6 | 6.3 | 1.8 | 3.8 | 9.9 | 9.7 | Cu | Si₃N₄ | 118.1 | 204.6 |
| 197 | Bal | 14.8 | 9.3 | 2.9 | 1.1 | 4.0 | 14.8 | 13.3 | Cu | Si₃N₄ | 115.4 | 199.9 |
| 198 | Bal. | 14.9 | 2.5 | 9.6 | 1.1 | 4.0 | 14.9 | 13.2 | Cu | Si₃N₄ | 109.8 | 190.2 |
| 199 | Bal. | 15.0 | 6.3 | 2.8 | 1.1 | 3.9 | 15.0 | 10.2 | Cu | Si₃N₄ | 138.5 | 239.9 |
| 200 | Bal. | 14.9 | 2.4 | 6.6 | 1.1 | 3.9 | 14.9 | 10.0 | Cu | Si₃N₄ | 131.9 | 228.5 |
| 201 | Bal. | 10.9 | 3.6 | 3.4 | 1.1 | 3.9 | 10.9 | 8.1 | Cu | Si₃N₄ | 136 | 235.6 |
| 202 | Bal. | 8.7 | 2.4 | 2.6 | 1.1 | 3.9 | 8.7 | 6.1 | Cu | Si₃N₄ | 121.4 | 210.3 |
| 203 | Bal. | 14.7 | 13.8 | 4.0 | 1.1 | 6.9 | 14.7 | 19.0 | Cu | Si₃N₄ | 70.1 | 121.4 |
| 204 | Bal. | 14.7 | 8.3 | 9.0 | 1.1 | 6.8 | 14.7 | 18.4 | Cu | Si₃N₄ | 66.4 | 115 |
| 205 | Bal. | 14.2 | 6.1 | 11.0 | 1.1 | 6.9 | 14.2 | 18.2 | Cu | Si₃N₄ | 66.8 | 115.7 |
| 206 | Bal. | 11.4 | 9.2 | 4.9 | 1.1 | 6.8 | 11.4 | 15.3 | Cu | Si₃N₄ | 51.5 | 89.2 |
| 207 | Bal. | 11.4 | 6.6 | 6.9 | 1.1 | 6.8 | 11.4 | 14.7 | Cu | Si₃N₄ | 57.1 | 98.9 |
| 208 | Bal. | 11.6 | 4.4 | 8.8 | 1.1 | 6.7 | 11.6 | 14.4 | Cu | Si₃N₄ | 65.3 | 113.1 |
| 209 | Bal. | 6.7 | 5.3 | 3.9 | 1.1 | 6.7 | 6.7 | 10.3 | Cu | Si₃N₄ | 56.5 | 97.9 |

**[Table 6]**

| Sample No. | Brazing element ratio[at.%] | | | | | | | | | | | | Type of first member | Type of second member | Evaluation | |
|---|---|---|---|---|---|---|---|---|---|---|---|---|---|---|---|---|
| | | | | | | | | | | | | | | | Shear strength [MPa] | Tensile strength [MPa] |
| | Cu | Mg | Sn | Ca | Ce | Y | Cr | Mo | V | Nb | Zr | Ti | | | | |
| 210 | Bal. | 9.0 | 10.5 | 1.5 | | | | | | | | 3. 9 | Cu | Si₃N₄ | 163.3 | 282.8 |
| 211 | Bal. | 10.3 | 8.1 | | 1.5 | | | | | | | 3.9 | Cu | Si₃N₄ | 172.5 | 298.8 |
| 212 | Bal. | 10.2 | 10.5 | | | 3.5 | | | | | | | Cu | Si₃N₄ | 77.1 | 133.5 |
| 213 | Bal. | 11.6 | 11.8 | | | 1.7 | | | | | | 3.9 | Cu | Si₃N₄ | 204. 9 | 354.9 |
| 214 | Bal. | 9. 8 | 10.3 | | | | 0.7 | | | | | | Cu | Si₃N₄ | 52.5 | 90. 9 |
| 215 | Bal. | 9. 8 | 10.3 | | | | 0.7 | | | | | | Cu | AlN | 62.2 | 107. 7 |
| 216 | Bal. | 9.4 | 9. 9 | | | | 0.7 | | | | | 3.9 | Cu | Si₃N₄ | 212. 6 | 368.2 |
| 217 | Bal. | 9.4 | 9. 9 | | | | 0. 7 | | | | | 3.9 | Cu | AlN | 194. 9 | 337. 6 |
| 218 | Bal. | 9.8 | 10.3 | | | | | 0.6 | | | | | Cu | AlN | 23.4 | 40.5 |
| 219 | Bal. | 9.4 | 9. 9 | | | | | 0.6 | | | | 3.9 | Cu | Si₃N₄ | 210.2 | 364. 1 |
| 220 | Bal. | 9.4 | 9. 9 | | | | | 0.6 | | | | 3. 9 | Cu | AlN | 218.4 | 378.3 |
| 221 | Bal. | 9.8 | 10.3 | | | | | | 0.6 | | | | Cu | Si₃N₄ | 64.5 | 111. 7 |
| 222 | Bal. | 9.8 | 10.3 | | | | | | 0.6 | | | | Cu | AlN | 102. 7 | 177.9 |
| 223 | Bal. | 9.4 | 9. 9 | | | | | | 0.6 | | | 3.9 | Cu | Si₃N₄ | 209.4 | 362. 7 |
| 224 | Bal. | 9.4 | 9. 9 | | | | | | 0.6 | | | 3. 9 | Cu | AlN | 168.6 | 292 |
| 225 | Bal. | 9.8 | 10.3 | | | | | | | 0.5 | | | Cu | Si₃N₄ | 45.6 | 79 |
| 226 | Bal. | 9.8 | 10.3 | | | | | | | 0.5 | | | Cu | AlN | 47.6 | 82.4 |
| 227 | Bal. | 9.4 | 9. 9 | | | | | | | 0.5 | | 3. 9 | Cu | Si₃N₄ | 207.7 | 359. 7 |
| 228 | Bal. | 9. 4 | 9. 9 | | | | | | | 0.5 | | 3.9 | Cu | AlN | 171.5 | 297 |
| 229 | Bal. | 9.8 | 10.3 | | | | | | | | 0.4 | | Cu | Si₃N₄ | 105.1 | 182 |
| 230 | Bal. | 9.8 | 10.3 | | | | | | | | 0.4 | | Cu | AlN | 100. 5 | 174.1 |
| 231 | Bal. | 9.4 | 9.9 | | | | | | | | 0.4 | 3.9 | Cu | Si₃N₄ | 200.7 | 347.6 |
| 232 | Bal. | 9.4 | 9.9 | | | | | | | | 0.4 | 3.9 | Cu | AlN | 197.1 | 341.4 |

### (3) Preparation of the joined body

Next, in samples 1 to 213, the prepared brazing material in paste form was applied to an intended joining surface of the first member shown in tables 1 to 6 by screen printing. Next, a second member was placed directly on the applied paste layer, and a pressure of 8 kPa was applied in a stacking direction. Then, heat treatment was performed at 800°C (820°C for samples 43 and 44 only) for 60 minutes in a vacuum atmosphere of 1.0 × 10⁻² Pa or less, thereby producing the joined bodies of samples 1 to 213. In samples 214 to 232, a predetermined molar amount of an active metal element selected from Cr, Mo, V, Nb, and Zr was sputtered onto the intended joining surface of the first member shown in table 6, and the prepared brazing material in the paste form was then applied thereon by screen printing. The brazing material element ratio column in table 6 shows the ratio including the sputtered active metal element. Next, the second member was placed directly on the applied paste layer, and a pressure of 8 kPa was applied along the stacking direction. Then, a heat treatment was performed at 800°C for 60 minutes in a vacuum atmosphere of 1.0 × 10⁻² Pa or less, thereby producing the joined bodies of samples 214 to 232.

### (4) Evaluation

The phase structure and joining strength of the joining layer of the produced joined bodies were evaluated by the following methods.

The cross section of the joining layer of the joined body was observed to evaluate the phase structure of the joining layer. Specifically, the first layer was observed in a cross section perpendicular to the joining surface, to confirm that (1) the solid solution phase and the compound phases have a sea-island structure, (2) a path (continuous phase) composed of the solid solution phase connecting the second layer and the copper material is secured in the first layer, and (3) within given field of view of approximately 10,000 µm², not a single void with a circular equivalent diameter of 8 µm or more is observed in the first layer.

The elements dissolved in the solid solution phase of the first layer were quantitatively determined. Specifically, the content of the elements dissolved in the solid solution phase was measured using an energy dispersive X-ray spectroscopy (EDX).

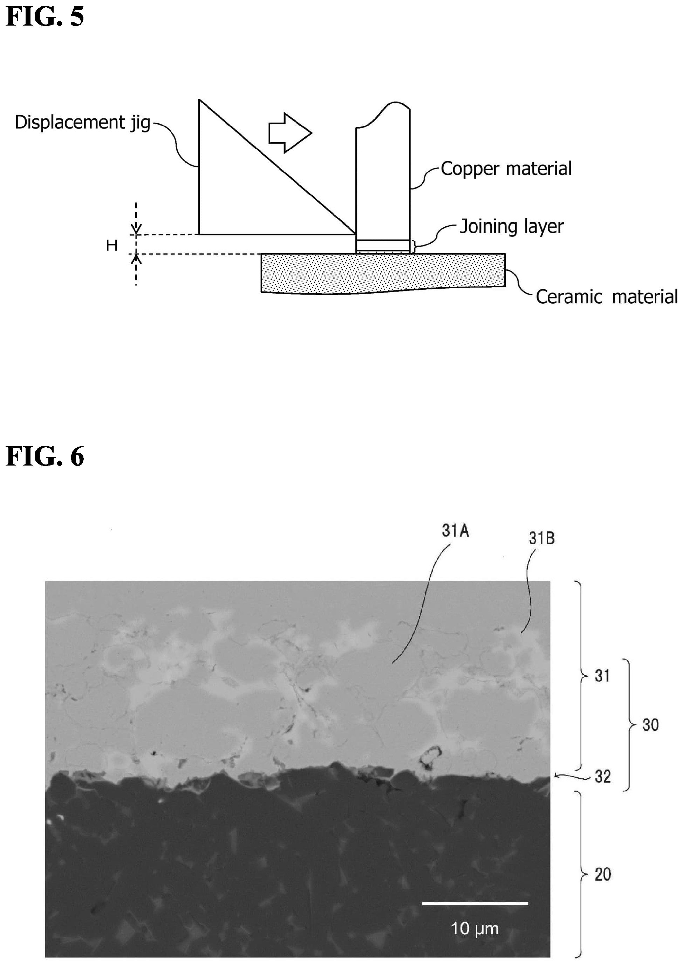

The joining strength of the joined body was evaluated by a shear strength test. Specifically, for the joined body, a copper material was processed into a cylindrical shape with a diameter of 3 mm and a height of 2 mm, and the joining surface of the surrounding ceramic material was exposed to prepare a test piece. Then, as shown in Fig. 5, with the ceramic material of the test piece fixed, a cylindrical copper material was pressed using a displacement jig in a direction parallel to the joining surface, and the magnitude of the stress at which the joining layer fractured (shear fracture) was measured, and the shear strength of the joining layer was calculated based on this value. A shear test position (contact height H of the displacement jig) was set at a height of 200 µm from the exposed surface of the ceramic material, and a movement speed of a displacement axis was set at 100 µm/s.

Further, the tensile strength of the joining layer was calculated based on the results of the shear strength test. The tensile strength of the joining layer can be calculated from the shear strength using the von Mises equation, and its magnitude is approximately 1.73 times the shear strength.

The results are shown in tables 1 to 6.

### (5) Evaluation results (Samples 1 to 7)

When the cross section of the joining layer of sample 1 was observed, it was confirmed that the joining layer had a phase structure as shown in Fig. 6. Fig. 6 is an enlarged image of a partial cross section of the joining layer of sample 1. As shown in Fig. 6, it was confirmed that a second layer 32 containing a compound of an active metal element was formed at the interface of the joining layer 30 on the ceramic member 20 side. It was also confirmed that the first layer 31 was formed on the second layer 32, and it was confirmed that the first layer 31 had a sea-island structure in which the compound phases 31B were dispersed as island phases in the solid solution phase 31A of the sea phase, which is a parent phase. Also, it was confirmed that a path (continuous phase) composed of the solid solution phase 31A connecting the second layer 32 and the copper material was secured in the first layer 31. It was also confirmed that there was not a void having a circular equivalent diameter of 1 µm or more in the first layer 31.

Further, it was confirmed from the EDX measurement that the compound phases 31B were formed from the intermetallic compound of Cu, Mg and Sn, specifically Cu₄MgSn. On the other hand, it was confirmed that the solid solution phase 31A was formed by Mg and Sn being dissolved in the Cu phase. The amount of Mg dissolved in the solid solution was 1.0 at.% and the amount of Sn dissolved in the solid solution was 1.6 at.%.

Further, as shown in table 1, it was confirmed that in sample 1, the shear strength was 186.4 MPa, and when converted based on this value, the tensile strength was 322.9 MPa. That is, it was confirmed that high joining strength could be achieved.

In samples 2 to 7, as shown in table 1, the contents of Mg and Sn in the brazing material were changed from sample 1, but it was confirmed that the phase structure similar to that of sample 1 could be achieved. Furthermore, it was confirmed that in all samples, similarly to sample 1, the solid solution phase 31A was formed by Mg and Sn dissolved in the Cu phase, and the compound phases 31B were formed by containing Cu₄MgSn. The amount of Mg dissolved in the solid solution was 5.0 at.% or less, and the amount of Sn dissolved in the solid solution was 5.0 at.% or less. Further, it was confirmed that in all samples, the shear strength was 20 MPa or more, and when converted based on this value, the tensile strength was 40 MPa or more.

### (Samples 8 to 14)

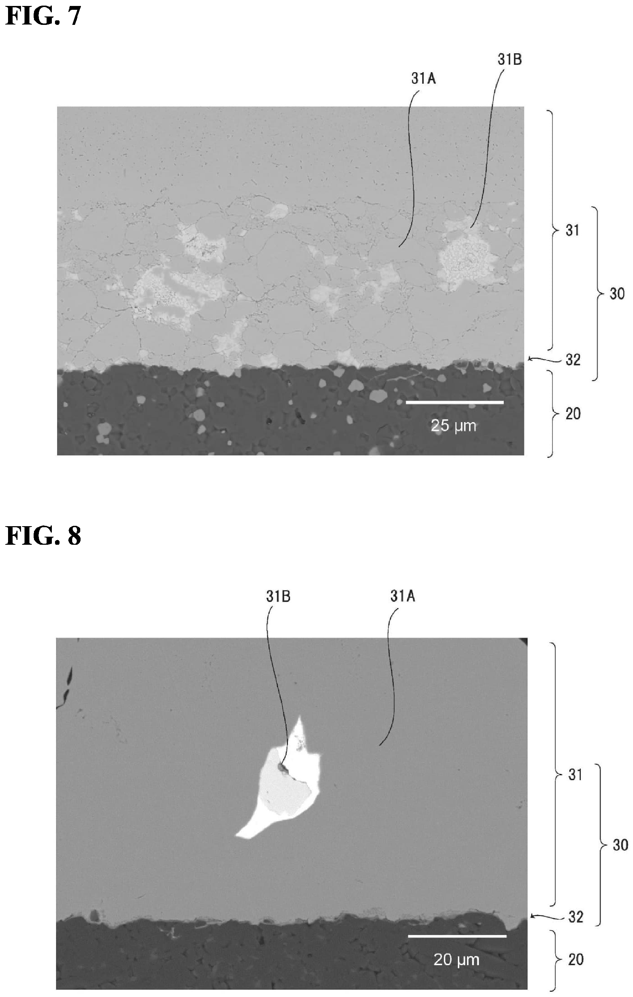

When the cross section of the joining layer of sample 8 was observed, the phase structure as shown in Fig. 7 was confirmed. Fig. 7 is an enlarged image of a partial cross section of the joining layer of sample 8. As shown in Fig. 7, it was confirmed that the joining layer 30 of sample 8 had the same phase structure as the joining layer 30 of sample 1. Particularly, it was confirmed that the first layer 31 has a sea-island structure in which the compound phases 31B were dispersed as island phases in the solid solution phase 31A of the sea phase, which is a parent phase. Furthermore, it was confirmed that a path (continuous phase) composed of the solid solution phase 31A connecting the second layer 32 and the copper material was secured in the first layer 31. It was also confirmed that there was not a void in the first layer 31 having a circular equivalent diameter of 1 µm or more.

Further, it was confirmed from the EDX measurement that the compound phases 31B were formed from the intermetallic compound of Cu, Mg and Sb, specifically CuMgSb. On the other hand, it was confirmed that in the solid solution phase 31A, Sb was dissolved, but Mg was not dissolved in the Cu phase. The amount of dissolved Sb was 3.1 at.%.

Furthermore as shown in table 1, it was confirmed that in sample 8, the shear strength was 139.5 MPa, and when converted based on this value, the tensile strength was 241.6 MPa. That is, it was confirmed that high joining strength could be achieved.

In samples 9 to 14, as shown in table 1, although the contents of Mg and Sb in the brazing material were changed from sample 8, it was confirmed that the phase structure similar to that of sample 8 could be obtained. In all samples, similarly to sample 8, it was confirmed that the solid solution phase 31A was formed with Sb dissolved in the Cu phase, while Mg was not dissolved, and the compound phases 31B were formed by containing CuMgSb. The amount of Sb dissolved in the solid solution was 4.0 at.% or less. Furthermore, it was confirmed that in all samples, the shear strength was 20 MPa or more, and when converted based on this value, the tensile strength was 40 MPa or more.

### (Samples 15 to 18)

When the cross section of the joining layer 30 of sample 15 was observed, it was confirmed that the joining layer 30 had a phase structure as shown in Fig. 8. Fig. 8 is an enlarged image of a partial cross section of the joining layer 30 of sample 15. As shown in Fig. 8, it was confirmed that the joining layer 30 of sample 15 had the same phase structure as the joining layer 30 of sample 1. Particularly, it was confirmed that the first layer 31 had a sea-island structure in which the compound phases 31B were dispersed as island phases within the solid solution phase 31A of the sea phase, which is a parent phase. Further, it was confirmed that a path (continuous phase) composed of the solid solution phase 31A connecting the second layer 32 and the copper material was secured in the first layer 31. It was also confirmed that there was not a void in the first layer 31 having a circular equivalent diameter of 1 µm or more.

Further, from the EDX measurement, it was confirmed that the compound phases 31B were formed from the intermetallic compound of Cu, Mg and Sb, specifically CuMgBi. On the other hand, it was confirmed that in the solid solution phase 31A, Mg was dissolved in the Cu phase, whereas Bi was not. The amount of dissolved Mg was 0.4 at.%.

Further, as shown in table 1, it was confirmed that in sample 15, the shear strength was 24.8 MPa, and when converted based on this value, the tensile strength was 43 MPa. That is, it was confirmed that high joining strength could be achieved.

In samples 16 to 18, as shown in table 1, the contents of Mg and Bi in the brazing material were changed from sample 15, but it was confirmed that a phase structure similar to that of sample 15 could be obtained. In all samples, similarly to sample 15, it was confirmed that the solid solution phase 31A was formed with Mg dissolved in the Cu phase while Bi was not dissolved, and the compound phases 31B were formed by containing CuMgBi. In all samples, the amount of Mg in the solid solution was 5.0 at.% or less. Further, in all samples, it was confirmed that the shear strength was 20 MPa or more, and when converted based on this value, the tensile strength was 40 MPa or more.

### (Samples 19 to 25)

In samples 19 to 25, the contents of Mg, Sn, and Sb were changed from those in samples 1 and 8, but it was confirmed that a phase structure similar to those of samples 1 and 8 could still be obtained. In all samples, it was confirmed that the sea-island structure of the solid solution phase 31A and compound phases 31B was formed, the path composed of the solid solution phase 31A connecting the second layer 32 and the copper material was formed in first layer 31, and there was not a void with a circular equivalent diameter of 1 µm or more.

### (Samples 26 to 33)

In samples 26 to 33, the brazing material was prepared so as to contain two Mg evaporation inhibiting elements, Sn and Sb. In the joining layer 30 of samples 26 to 33, a phase structure similar to that of sample 1 was obtained. It was also confirmed that the sea-island structure of the solid solution phase 31A and the compound phases 31B was formed, the path composed of the solid solution phase 31A connecting the second layer 32 and the copper material was formed in the first layer 31, and there was not a void with a circular equivalent diameter of 1 µm or more.

Further, from the EDX measurement, it was confirmed that the compound phases 31B were formed from the intermetallic compound of Cu, Mg, Sn, and Sb. This intermetallic compound was composed of Cu, Mg, Sn, and partially substituted Sb. On the other hand, it was confirmed that the solid solution phase 31A was composed of Mg, Sn, and Sb dissolved in the Cu phase.

Further, as shown in table 1, it was confirmed that in all samples, the shear strength was 20 MPa or more, and when converted based on this value, the tensile strength was 40 MPa or more.

### (Samples 34 to 39)

In samples 34 to 39, as shown in table 1, the brazing material was prepared to produce a joined body in the same manner as in sample 1, except that the type of the ceramic member was changed from Si₃N₄ to SUS304, AlN, Al₂O₃, SiC, or diamond.

In the joining layer 30 of samples 34 to 39, a phase structure similar to that of sample 1 was obtained. It was also confirmed that the sea-island structure of the solid solution phase 31A and the compound phases 31B was formed, the path composed of the solid solution phase 31A connecting the second layer 32 and the copper material was formed in the first layer 31, and there was not a void with a circular equivalent diameter of 1 µm or more.

Further, as shown in table 1, it was confirmed that in all samples, the shear strength was 20 MPa or more, and when converted based on this value, the tensile strength was 40 MPa or more.

### (Samples 40 to 42)

In samples 40 to 42, as shown in table 1, an iron alloy material (42ALLOY) was used as the metal member, and a Si₃Ni₄ substrate was used as the ceramic member. It was confirmed that in all samples, a phase structure similar to that of sample 1, etc., was obtained, and a predetermined joining strength could be achieved.

### (Samples 43 and 44)

As shown in table 1, in sample 43 in which the brazing material containing Mg and Ti was used, and in sample 44 in which the brazing material containing only Mg was used, the shear strength was less than 20 MPa and the tensile strength was less than 40 MPa, and it was confirmed that practical joining strength was not obtained (substantially, no joining was achieved). In these samples, the joining strength sufficient to withstand processing for cross-sectional microstructure observation could not be obtained, and therefore it was not possible to observe the joining layer in the cross section perpendicular to the joining surface.

### (Samples 45 to 232)

As shown in tables 2 to 6, it was confirmed that in all samples 45 to 232, the shear strength was 20 MPa or more, and when converted based on this value, the tensile strength was 40 MPa or more.

### <Preferable aspects of the present disclosure>

Preferrable aspects of the present disclosure are supplementarily described below. These aspects can be combined with each other.

### (Supplementary description 1)

There is provided a brazing material containing:
Cu;
Mg;
at least one first element selected from the group consisting of Sn, Sb, and Bi; and
at least one second element selected from the group consisting of Ti, Zr, Hf, V, Nb, Ta, Cr, Mo, W, Y, Ca, Ce, La, Sm, Yb, Nd, Gd, and Er.

### (Supplementary description 2)

Preferably, there is provided the brazing material according to supplementary description 1,
wherein a content of the Mg is 1 at.% or more and 15 at.% or less, a content of the first element is 1 at.% or more and 20 at.% or less, a content of the second element is 0.1 at.% or more and 10 at.% or less, and when the content of the Mg is X at. % and the content of the first element is Y at.%, the relationship X - 6 ≤ Y ≤ X + 6 is satisfied.

### (Supplementary description 3)

Preferably, there is provided the brazing material according to supplementary description 1 or 2, that is formed in a form of a paste, comprising Cu powder containing Cu and an alloy powder having an intermetallic compound containing at least Mg, the first element, and the second element.

### (Supplementary description 4)

Preferably, there is provided a joined body including:
a first member composed of metal;
a second member joined to the first member and composed of the same or a different metal as the first member, or ceramics; and
a joining layer on joining surfaces of the first member and the second member,
wherein the joining layer contains:
   Cu;
   Mg;
   at least one first element selected from the group consisting of Sn, Sb, and Bi;
      and
   at least one second element selected from the group consisting of Ti, Zr, Hf, V, Nb, Ta, Cr, Mo, W, Y, Ca, Ce, La, Sm, Yb, Nd, Gd, and Er.

### (Supplementary description 5)

There is provided the joined body according to supplementary description 4,
wherein the joining layer includes:
a first layer that forms an interface with the first member and includes a solid solution phase in which at least one of the Mg and the first elements are dissolved in Cu, and a compound phase that includes an intermetallic compound containing Cu, Mg, and the first element; and
a second layer that forms an interface with the second member, includes a compound of the second element, and is in contact with the first layer.

### (Supplementary description 6)

Preferably, there is provided the joined body according to supplementary description 5, wherein when the first layer is observed in a cross section perpendicular to the joining surface, the number of voids having a circular equivalent diameter of 8 µm or more is less than one per 10,000 µm².

### (Supplementary description 7)

Preferably, there is provided the joined body according to supplementary description 5, wherein the first layer has a path composed of the solid solution phase and connecting the second layer and the first member.

### (Supplementary description 8)

Preferably, there is provided the joined body according to any one of supplementary descriptions 4 to 7, wherein a shear strength of the joining layer is 20 MPa or more.

### (Supplementary description 9)

Preferably, there is provided the joined body according to any one of supplementary descriptions 4 to 8, wherein a tensile strength of the joining layer is 40 MPa or more.

### (Supplementary description 10)

There is provided a brazing material manufacturing method used to join a first member composed of metal to a second member composed of the same or different metal as the first member or ceramics,
wherein a powder containing Cu, Mg, at least one first element selected from the group consisting of Sn, Sb, and Bi, and at least one second element selected from the group consisting of Ti, Zr, Hf, V, Nb, Ta, Cr, Mo, W, Y, Ca, Ce, La, Sm, Yb, Nd, Gd, and Er is mixed with a solvent to obtain a brazing material in a paste form.

### (Supplementary description 11)

There is provided a joined body manufacturing method, the method including:
placing a first member composed of metal and a second member composed of the same or different metal as the first member or a ceramic so as to be stacked with a brazing material interposed therebetween; and
heating and holding a stacked body of the first member and the second member while applying pressure in a stacking direction,
wherein a material containing Cu, Mg, at least one first element selected from the group consisting of Sn, Sb, and Bi, and at least one second element selected from the group consisting of Ti, Zr, Hf, V, Nb, Ta, Cr, Mo, W, Y, Ca, Ce, La, Sm, Yb, Nd, Gd, and Er, is used as the brazing material.

### (Supplementary description 12)

Preferably, there is provided the joined body manufacturing method according to supplementary description 11, wherein the brazing material is formed in a paste form, including Cu powder containing Cu and alloy powder formed from an intermetallic compound containing at least Mg and the first element.

### (Supplementary description 13)

Preferably, there is provided the joined body manufacturing method according to supplementary description 11 or 12, wherein in the heating, the stacked body is heated at a temperature of 720°C or higher and 1000°C or lower.

### Descriptions of Signs and Numerals

100 Metal/ceramic joined body
100' Stacked Body
10 Metal member (First member)
10s Joining surface
20 Ceramic member (Second member)
20s Joining surface
30 Joining layer
31 First layer
31A Solid solution phase
31B Compound phase
32 Second layer
50 Brazing material

## Claims

1. A brazing material containing:
Cu;
Mg;
at least one first element selected from the group consisting of Sn, Sb, and Bi; and
at least one second element selected from the group consisting of Ti, Zr, Hf, V, Nb, Ta, Cr, Mo, W, Y, Ca, Ce, La, Sm, Yb, Nd, Gd, and Er.

2. The brazing material according to claim 1,
wherein a content of the Mg is 1 at.% or more and 15 at.% or less, a content of the first element is 1 at.% or more and 20 at.% or less, a content of the second element is 0.1 at.% or more and 10 at.% or less, and when the content of the Mg is X at.% and the content of the first element is Y at.%, X - 6 ≤ Y ≤ X + 6 is satisfied.

3. The brazing material according to claim 1 or 2, that is formed in a form of a paste, comprising Cu powder containing Cu and an alloy powder having an intermetallic compound containing at least Mg, the first element, and the second element.

4. A joined body comprising:
a first member composed of metal;
a second member joined to the first member and composed of the same or a different metal as the first member, or ceramics; and
a joining layer on joining surfaces of the first member and the second member,
wherein the joining layer contains:
Cu;
Mg;
at least one first element selected from the group consisting of Sn, Sb, and Bi;
and
at least one second element selected from the group consisting of Ti, Zr, Hf, V, Nb, Ta, Cr, Mo, W, Y, Ca, Ce, La, Sm, Yb, Nd, Gd, and Er.

5. The joined body according to claim 4,
wherein the joining layer includes:
a first layer that forms an interface with the first member and includes a solid solution phase in which Mg and at least one of the first elements are dissolved in Cu, and compound phases that include an intermetallic compound containing Cu, Mg, and the first element; and
a second layer that forms an interface with the second member, includes a compound of the second element, and is in contact with the first layer.

6. The joined body according to claim 5, wherein when the first layer is observed in a cross section perpendicular to the joining surface, the number of voids having a circular equivalent diameter of 8 µm or more is less than one per 10,000 µm².

7. The joined body according to claim 5, wherein the first layer has a path composed of the solid solution phase and connecting the second layer and the first member.

8. The joined body according to claim 4 or 5, wherein a shear strength of the joining layer is 20 MPa or more.

9. The joined body according to claim 4 or 5, wherein a tensile strength of the joining layer is 40 MPa or more.

10. A brazing material manufacturing method used to join a first member composed of metal to a second member composed of the same or different metal as the first member or ceramics,
wherein a powder containing Cu, Mg, at least one first element selected from the group consisting of Sn, Sb, and Bi, and at least one second element selected from the group consisting of Ti, Zr, Hf, V, Nb, Ta, Cr, Mo, W, Y, Ca, Ce, La, Sm, Yb, Nd, Gd, and Er is mixed with a solvent to obtain a brazing material in a paste form.

11. A joined body manufacturing method, the method including:
placing a first member composed of metal and a second member composed of the same or different metal as the first member or a ceramic so as to be stacked with a brazing material interposed therebetween; and
heating and holding a stacked body of the first member and the second member while applying pressure in a stacking direction,
wherein a material containing Cu, Mg, at least one first element selected from the group consisting of Sn, Sb, and Bi, and at least one second element selected from the group consisting of Ti, Zr, Hf, V, Nb, Ta, Cr, Mo, W, Y, Ca, Ce, La, Sm, Yb, Nd, Gd, and Er, is used as the brazing material.

12. The joined body manufacturing method according to claim 11, wherein the brazing material is formed in a paste form, including Cu powder containing Cu and alloy powder formed from an intermetallic compound containing at least Mg and the first element.

13. The joined body manufacturing method according to claim 11 or 12, wherein in the heating, the stacked body is heated at a temperature of 720°C or higher and 1000°C or lower.
